# EUROPEAN PATENT APPLICATION

(11) **EP 4 191 904 A1**
(43) Date of publication of application: **07.06.2023**
(21) Application number: 20948488.0
(22) Date of filing: 07.08.2020

(54) **ALGORITHM NEGOTIATION METHOD IN GENERIC BOOTSTRAPPING ARCHITECTURE AND RELATED APPARATUS**

(71) Applicant: Huawei Technologies Co., Ltd., Shenzhen, Guangdong 518129 (CN)
(72) Inventor: DENG, Juan, Shenzhen, Guangdong 518129 (CN); HE, Chengdong, Shenzhen, Guangdong 518129 (CN)
(74) Representative: Epping - Hermann - Fischer
(86) International application number: PCT/CN2020/107991
(87) International publication number: WO 2022/027673

(57) **Abstract**

Embodiments of this application provide an algorithm negotiation method in a generic bootstrapping architecture and a related apparatus. The method includes: A bootstrapping server function network element obtains an algorithm supported by a terminal device, where the algorithm supported by the terminal device includes a first algorithm and/or a second algorithm; selects a target algorithm based on the algorithm supported by the terminal device; determines a first message authentication code based on the target algorithm; and sends the first message authentication code to the terminal device. Based on the embodiments of this application, a problem of algorithm compatibility between old and new versions of a terminal device and a BSF in a network is resolved.

## Description

### TECHNICAL FIELD

This application relates to the field of communication technologies, and in particular, to an algorithm negotiation method in a generic bootstrapping architecture and a related apparatus.

### BACKGROUND

The 3rd Generation Partnership Project (3rd Generation Partnership Project, 3GPP) provides a security mechanism for mutual authentication and key generation between a terminal device and a bootstrapping server function (bootstrapping server function, BSF) in a network, to perform secure communication. A generic bootstrapping architecture (generic bootstrapping architecture, GBA) is a general mechanism for mutual authentication and key agreement that is established between a terminal device and a BSF in a network and defined by the 3GPP.

With the continuous development of information technologies, in a 3 GPP network architecture, versions of a terminal device and a BSF in a network may be inconsistent. As a result, different algorithms are used to determine an authentication credential, resulting in a failure of the generic bootstrapping architecture GBA. Therefore, how to resolve incompatibility between old and new versions of the terminal device and the BFS in the network in the GBA is a technical problem to be resolved by persons skilled in the art.

### SUMMARY

Disclosed in embodiments of this application are an algorithm negotiation method in a generic bootstrapping architecture and a related apparatus, to resolve algorithm incompatibility between old and new versions of a terminal device and a BSF in a network.

Disclosed in a first aspect of embodiments of this application is an algorithm negotiation method in a generic bootstrapping architecture, including:
A bootstrapping server function network element obtains an algorithm supported by a terminal device, where the algorithm supported by the terminal device includes a first algorithm and/or a second algorithm.

The bootstrapping server function network element selects a target algorithm based on the algorithm supported by the terminal device.

The bootstrapping server function network element determines a first message authentication code based on the target algorithm.

The bootstrapping server function network element sends the first message authentication code to the terminal device. In the foregoing method, the BSF selects the target algorithm based on the algorithm supported by the terminal device, and then verifies the first message authentication code by using the target algorithm, thereby improving security. In addition, the BSF sends the first message authentication code to the terminal device, ensuring that the terminal device and the BSF use a same algorithm, so as to resolve algorithm incompatibility between the terminal device and the BSF.

In a possible implementation, the method further includes: The bootstrapping server function network element sends the target algorithm to the terminal device.

In the foregoing method, the BSF sends the target algorithm to the terminal device. This avoids that the terminal device and the BSF use different algorithms to verify AUTN*. Therefore, algorithm consistency between the BSF and the terminal device is ensured, and algorithm incompatibility between the BSF and the terminal device is resolved. In another possible implementation, the first algorithm includes a secure hash algorithm 1, and the second algorithm includes a secure hash algorithm 256.

In another possible implementation, that a bootstrapping server function network element obtains an algorithm supported by a terminal device includes: The bootstrapping server function network element receives the algorithm supported by the terminal device, first indication information, a first identifier, or a second identifier from the terminal device. The bootstrapping server function network element determines, based on the first indication information, that the algorithm supported by the terminal device includes the second algorithm. The bootstrapping server function network element determines, based on the first identifier, that the algorithm supported by the terminal device includes the second algorithm, where the first identifier is generated based on the second identifier; or the bootstrapping server function network element determines, based on the second identifier, that the terminal device supports the first algorithm.

In the foregoing method, a specific algorithm supported by the terminal device can be quickly determined based on the first indication information, the first identifier, or the second identifier. This is simple and convenient, and saves time.

In another possible implementation, that the first identifier is generated based on the second identifier includes: the first identifier is generated based on the second identifier and an identity public key IPK.

In another possible implementation, that the bootstrapping server function network element receives the algorithm supported by the terminal device, first indication information, a first identifier, or a second identifier from the terminal device includes: The bootstrapping server function network element receives a first bootstrapping request message from the terminal device, where the first bootstrapping request message includes the algorithm supported by the terminal device, the first indication information, the first identifier, or the second identifier.

In the foregoing method, the first bootstrapping request message carries the algorithm supported by the terminal device, the first indication information, the first identifier, or the second identifier, so that resources can be appropriately used. In another possible implementation, the second identifier is one of the following information of the terminal device: a subscription permanent identifier SUPI, an internet protocol multimedia private identity IMPI, an international mobile subscriber identity IMSI, or a generic public subscription identifier GPSI.

In another possible implementation, that a bootstrapping server function network element obtains an algorithm supported by a terminal device includes: The bootstrapping server function network element receives second indication information or the second algorithm supported by the terminal device from the home subscriber server network element, where the second indication information indicates that the algorithm supported by the terminal device includes the second algorithm. The bootstrapping server function network element determines, based on the second indication information, that the algorithm supported by the terminal device includes the second algorithm.

In the foregoing method, it can be quickly determined, based on the second indication information, that the algorithm supported by the terminal device includes the second algorithm. This is simple and convenient to operate, and saves time.

In another possible implementation, that the bootstrapping server function network element determines a first message authentication code (MAC*) based on the target algorithm includes: The bootstrapping server function network element receives a second message authentication code (MAC) from the home subscriber server network element. The bootstrapping server function network element determines the first message authentication code (MAC*) based on the target algorithm and the second message authentication code (MAC).

In another possible implementation, that the bootstrapping server function network element receives second indication information or the second algorithm supported by the terminal device from the home subscriber server network element includes: The bootstrapping server function network element sends a first request message to the home subscriber server network element. The bootstrapping server function network element receives a first response message from the home subscriber server network element, where the first response message includes the second indication information or the algorithm supported by the terminal device.

In the foregoing method, the first response message includes the second indication information or the algorithm supported by the terminal device, so that resources can be appropriately used.

In another possible implementation, before the bootstrapping server function network element selects a target algorithm based on the algorithm supported by the terminal device, the method further includes: The bootstrapping server function network element determines to use a generic bootstrapping architecture with universal integrated circuit card-based enhancements GBA_U mechanism.

In another possible implementation, that the bootstrapping server function network element selects a target algorithm based on the algorithm supported by the terminal device includes: When the algorithm supported by the terminal device includes the second algorithm, the bootstrapping server function network element selects the second algorithm as the target algorithm.

In another possible implementation, after a bootstrapping server function network element obtains an algorithm supported by a terminal device, and before the bootstrapping server function network element selects a target algorithm based on the algorithm supported by the terminal device, the method further includes: The bootstrapping server function network element determines whether the bootstrapping server function network element supports the algorithm supported by the terminal device. If the bootstrapping server function network element supports the algorithm supported by the terminal device, the bootstrapping server function network element selects the target algorithm. If the bootstrapping server function network element does not support the algorithm supported by the terminal device, the bootstrapping server function network element sends third indication information to the terminal device, where the third indication information indicates the terminal device to use a mobile equipment-based generic bootstrapping architecture GBA_ME mechanism.

Disclosed in a second aspect of embodiments of this application is an algorithm negotiation method in a generic bootstrapping architecture, including:
A terminal device generates a first bootstrapping request message.

The terminal device sends the first bootstrapping request message to a bootstrapping server function network element, where the first bootstrapping request message includes an algorithm supported by the terminal device, a first identifier, a second identifier, or first indication information, the algorithm supported by the terminal device includes a first algorithm and/or a second algorithm, the first identifier indicates that the algorithm supported by the terminal device includes the second algorithm, the second identifier indicates that the terminal device supports the first algorithm, the first identifier is generated based on the second identifier, and the first indication information indicates that the algorithm supported by the terminal device includes the second algorithm.

The terminal device receives a first message authentication code or a second message authentication code from the bootstrapping server function network element.

In the foregoing method, the first bootstrapping request message includes the algorithm supported by the terminal device, the first identifier, the second identifier, or the first indication information, so that the BSF can quickly determine, after receiving the first bootstrapping request message, the algorithm supported by the terminal device. Therefore, time is saved and resources are appropriately used.

In a possible implementation, the first algorithm includes a secure hash algorithm 1, and the second algorithm includes a secure hash algorithm 256.

In another possible implementation, that the first identifier is generated based on the second identifier includes: the first identifier is generated based on the second identifier and an identity public key IPK.

In another possible implementation, the second identifier is one of the following information of the terminal device: a subscription permanent identifier SUPI, an internet protocol multimedia private identifier IMPI, an international mobile subscriber identity IMSI, or a generic public subscription identifier GPSI.

In another possible implementation, the terminal device receives the first message authentication code (MAC*) from the bootstrapping server function network element. The method further includes: The terminal device receives a target algorithm from the bootstrapping server function network element, where the target algorithm is determined based on the algorithms supported by the terminal device. The terminal device determines the second message authentication code based on the target algorithm and the first message authentication code, where the second message authentication code is for authenticating the bootstrapping server function network element.

In the foregoing method, the terminal device receives the target algorithm from the BSF. This avoids that the terminal device and the BSF use different algorithms to verify AUTN*. Therefore, algorithm consistency between the BSF and the terminal device is ensured, and algorithm incompatibility between the BSF and the terminal device is resolved. In another possible implementation, before a terminal device generates a first bootstrapping request message, the method further includes: A mobile equipment ME of the terminal device reads an algorithm supported by a universal integrated circuit card UICC of the terminal device, where the algorithm supported by the terminal device is the algorithm supported by the universal integrated circuit card UICC.

In another possible implementation, the terminal device receives the second message authentication code from the bootstrapping server function network element. The method further includes: The terminal device receives third indication information from the bootstrapping server function network element, where the third indication information indicates the terminal device to use a mobile equipment-based generic bootstrapping architecture GBA_ME mechanism. The terminal device verifies the second message authentication code.

Disclosed in a third aspect of embodiments of this application is an algorithm negotiation method in a generic bootstrapping architecture, including:
A home subscriber server network element receives a first request message from a bootstrapping server function network element.

The home subscriber server network element sends a first response message to the bootstrapping server function network element, where the first response message includes an algorithm supported by the terminal device or second indication information, the algorithm supported by the terminal device includes a first algorithm and/or a second algorithm, and the second indication information indicates that the algorithm supported by the terminal device includes the second algorithm.

In the foregoing method, the algorithm supported by the terminal device or the second indication information is included in the first response message, so that the HSS can quickly determine, after the BSF receives the first response message, the algorithm supported by the terminal device. Therefore, time is saved and resources are appropriately used.

In a possible implementation, the first algorithm includes a secure hash algorithm 1, and the second algorithm includes a secure hash algorithm 256.

Disclosed in a fourth aspect of embodiments of this application is an algorithm negotiation apparatus in a generic bootstrapping architecture, including:
a processing unit, configured to obtain an algorithm supported by a terminal device, where the algorithm supported by the terminal device includes a first algorithm and/or a second algorithm, where
the processing unit is further configured to select a target algorithm based on the algorithm supported by the terminal device, and
the processing unit is further configured to determine a first message authentication code based on the target algorithm; and
a communication unit, configured to send the first message authentication code to the terminal device.

In a possible implementation, the communication unit is further configured to send the target algorithm to the terminal device.

In another possible implementation, the first algorithm includes a secure hash algorithm 1, and the second algorithm includes a secure hash algorithm 256.

In another possible implementation, the communication unit is further configured to receive the algorithm supported by the terminal device, first indication information, a first identifier, or a second identifier from the terminal device. The processing unit is further configured to determine, based on the first indication information, that the algorithm supported by the terminal device includes the second algorithm; the processing unit is further configured to determine, based on the first identifier, that the algorithm supported by the terminal device includes the second algorithm, where the first identifier is generated based on the second identifier; or the processing unit is further configured to determine, based on the second identifier, that the terminal device supports the first algorithm.

In another possible implementation, the first identifier is generated based on the second identifier and an identity public key IPK.

In another possible implementation, the communication unit is further configured to receive a first bootstrapping request message from the terminal device, where the first bootstrapping request message includes the algorithm supported by the terminal device, the first indication information, the first identifier, or the second identifier.

In another possible implementation, the second identifier is one of the following information of the terminal device: a subscription permanent identifier SUPI, an internet protocol multimedia private identifier IMPI, an international mobile subscriber identity IMSI, or a generic public subscription identifier GPSI.

In another possible implementation, the communication unit is further configured to receive second indication information or the second algorithm supported by the terminal device from the home subscriber server network element, where the second indication information indicates that the algorithm supported by the terminal device includes the second algorithm; and the processing unit is further configured to determine, based on the second indication information, that the algorithm supported by the terminal device includes the second algorithm.

In another possible implementation, the communication unit is further configured to send a first request message to the home subscriber server network element. The communication unit is further configured to receive a first response message from the home subscriber server network element, where the first response message includes the second indication information or the algorithm supported by the terminal device.

In another possible implementation, the processing unit is further configured to: before selecting the target algorithm based on the algorithm supported by the terminal device, determine to use a generic bootstrapping architecture with universal integrated circuit card-based enhancements GBA_U mechanism.

In another possible implementation, the processing unit is further configured to: when the algorithm supported by the terminal device includes the second algorithm, select the second algorithm as the target algorithm.

In another possible implementation, the processing unit is further configured to: after obtaining the algorithm supported by the terminal device and before selecting the target algorithm based on the algorithm supported by the terminal device, determine whether the processing unit supports the algorithm supported by the terminal device. If the processing unit supports the algorithm supported by the terminal device, the processing unit selects the target algorithm; or if the processing unit does not support the algorithm supported by the terminal device, the processing unit sends third indication information to the terminal device, where the third indication information indicates the terminal device to use a mobile equipment-based generic bootstrapping architecture GBA_ME mechanism.

For technical effects brought by the fourth aspect or the optional implementations, refer to descriptions of the technical effects brought by the first aspect or the corresponding implementations.

Disclosed in a fifth aspect of embodiments of this application is an algorithm negotiation apparatus in a generic bootstrapping architecture, including:
a processing unit, configured to generate a first bootstrapping request message; and
a communication unit, configured to send the first bootstrapping request message to a bootstrapping server function network element, where the first bootstrapping request message includes an algorithm supported by the terminal device, a first identifier, a second identifier, or first indication information, the algorithm supported by the terminal device includes a first algorithm and/or a second algorithm, the first identifier indicates that the algorithm supported by the terminal device includes the second algorithm, the second identifier indicates that the terminal device supports the first algorithm, the first identifier is generated based on the second identifier, and the first indication information indicates that the algorithm supported by the terminal device includes the second algorithm.

The communication unit is further configured to receive a first message authentication code or a second message authentication code from the bootstrapping server function network element.

In a possible implementation, the first algorithm includes a secure hash algorithm 1, and the second algorithm includes a secure hash algorithm 256.

In another possible implementation, the first identifier is generated based on the second identifier and an identity public key IPK.

In another possible implementation, the second identifier is one of the following information of the terminal device: a subscription permanent identifier SUPI, an internet protocol multimedia private identity IMPI, an international mobile subscriber identity IMSI, or a generic public subscription identifier GPSI.

In another possible implementation, the communication unit is configured to receive a target algorithm from the bootstrapping server function network element, where the target algorithm is determined based on the algorithms supported by the terminal device. The processing unit is configured to determine the second message authentication code based on the target algorithm and the first message authentication code, where the second message authentication code is for authenticating the bootstrapping server function network element.

In another possible implementation, the processing unit is further configured to: before generating the first bootstrapping request message, read an algorithm supported by a universal integrated circuit card UICC of the terminal device, where the algorithm supported by the terminal device is the algorithm supported by the universal integrated circuit card UICC.

In another possible implementation, the communication unit is further configured to receive third indication information from the bootstrapping server function network element, where the third indication information indicates the terminal device to use a mobile equipment-based generic bootstrapping architecture GBA_ME mechanism. The processing unit is further configured to verify the second message authentication code.

For technical effects brought by the fifth aspect or the optional implementations, refer to descriptions of the technical effects brought by the second aspect or the corresponding implementations.

Disclosed in a sixth aspect of embodiments of this application is an algorithm negotiation apparatus in a generic bootstrapping architecture, including:
a processing unit, configured to receive a first request message from a bootstrapping server function network element by using a communication unit.

The communication unit is further configured to send a first response message to the bootstrapping server function network element, where the first response message includes an algorithm supported by the terminal device or second indication information, the algorithm supported by the terminal device includes a first algorithm and/or a second algorithm, and the second indication information indicates that the algorithm supported by the terminal device includes the second algorithm.

In a possible implementation, the first algorithm includes a secure hash algorithm 1, and the second algorithm includes a secure hash algorithm 256.

For technical effects brought by the sixth aspect or the optional implementations, refer to descriptions of the technical effects brought by the third aspect or the corresponding implementations.

Disclosed in a seventh aspect of embodiments of this application is an algorithm negotiation apparatus in a generic bootstrapping architecture, including at least one processor and a transceiver. The at least one processor is configured to communicate with another apparatus by using the transceiver, the memory is configured to store a computer program, and the processor is configured to invoke the computer program to perform the following operations:
obtaining an algorithm supported by a terminal device, where the algorithm supported by the terminal device includes a first algorithm and/or a second algorithm;
selecting a target algorithm based on the algorithm supported by the terminal device;
determining a first message authentication code based on the target algorithm; and
sending the first message authentication code to the terminal device by using the transceiver.

In a possible implementation, the processor is further configured to send the target algorithm to the terminal device by using the transceiver.

In another possible implementation, the first algorithm includes a secure hash algorithm 1, and the second algorithm includes a secure hash algorithm 256.

In another possible implementation, the processor is further configured to receive, by using the transceiver, the algorithm supported by the terminal device, first indication information, a first identifier, or a second identifier from the terminal device; determine, based on the first indication information, that the algorithm supported by the terminal device includes the second algorithm; determine, based on the first identifier, that the algorithm supported by the terminal device includes the second algorithm, where the first identifier is generated based on the second identifier; or determine, based on the second identifier, that the terminal device supports the first algorithm.

In another possible implementation, the first identifier is generated based on the second identifier and an identity public key IPK.

In another possible implementation, the processor is further configured to receive a first bootstrapping request message from the terminal device by using the transceiver, where the first bootstrapping request message includes the algorithm supported by the terminal device, the first indication information, the first identifier, or the second identifier.

In another possible implementation, the second identifier is one of the following information of the terminal device: a subscription permanent identifier SUPI, an internet protocol multimedia private identifier IMPI, an international mobile subscriber identity IMSI, or a generic public subscription identifier GPSI.

In another possible implementation, the processor is further configured to receive, by using the transceiver, second indication information or the second algorithm supported by the terminal device from the home subscriber server network element, where the second indication information indicates that the algorithm supported by the terminal device includes the second algorithm; and determine, based on the second indication information, that the algorithm supported by the terminal device includes the second algorithm.

In another possible implementation, the processor is further configured to send a first request message to the home subscriber server network element by using the transceiver; and receive a first response message from the home subscriber server network element by using the transceiver, where the first response message includes the second indication information or the algorithm supported by the terminal device.

In another possible implementation, the processor is further configured to: before selecting the target algorithm based on the algorithm supported by the terminal device, determine to use a generic bootstrapping architecture with universal integrated circuit card-based enhancements GBA_U mechanism.

In another possible implementation, the processor is further configured to: when the algorithm supported by the terminal device includes the second algorithm, select the second algorithm as the target algorithm.

In another possible implementation, the processor is further configured to: after obtaining the algorithm supported by the terminal device and before selecting the target algorithm based on the algorithm supported by the terminal device, determine whether the processor supports the algorithm supported by the terminal device; if the processor supports the algorithm supported by the terminal device, the processor selects the target algorithm; or if the processor does not support the algorithm supported by the terminal device, the processor sends third indication information to the terminal device by using the transceiver, where the third indication information indicates the terminal device to use a mobile equipment-based generic bootstrapping architecture GBA_ME mechanism.

For technical effects brought by the seventh aspect or the optional implementations, refer to descriptions of the technical effects brought by the first aspect or the corresponding implementations.

Disclosed in an eighth aspect of embodiments of this application is an algorithm negotiation apparatus in a generic bootstrapping architecture, including at least one processor and a transceiver. The at least one processor is configured to communicate with another apparatus by using the transceiver, the memory is configured to store a computer program, and the processor is configured to invoke the computer program to perform the following operations:
generating a first bootstrapping request message;
sending the first bootstrapping request message to a bootstrapping server function network element by using the transceiver, where the first bootstrapping request message includes an algorithm supported by the terminal device, a first identifier, a second identifier, or first indication information, the algorithm supported by the terminal device includes a first algorithm and/or a second algorithm, the first identifier indicates that the algorithm supported by the terminal device includes the second algorithm, the second identifier indicates that the terminal device supports the first algorithm, the first identifier is generated based on the second identifier, and the first indication information indicates that the algorithm supported by the terminal device includes the second algorithm; and
receiving a first message authentication code or a second message authentication code from the bootstrapping server function network element by using the transceiver.

In a possible implementation, the first algorithm includes a secure hash algorithm 1, and the second algorithm includes a secure hash algorithm 256.

In another possible implementation, the first identifier is generated based on the second identifier and an identity public key IPK.

In another possible implementation, the second identifier is one of the following information of the terminal device: a subscription permanent identifier SUPI, an internet protocol multimedia private identifier IMPI, an international mobile subscriber identity IMSI, or a generic public subscription identifier GPSI.

In another possible implementation, the processor is further configured to receive a target algorithm from the bootstrapping server function network element by using the transceiver, where the target algorithm is determined based on the algorithms supported by the terminal device; and determine the second message authentication code based on the target algorithm and the first message authentication code, where the second message authentication code is for authenticating the bootstrapping server function network element.

In another possible implementation, the processor is further configured to: before generating the first bootstrapping request message, read an algorithm supported by a universal integrated circuit card UICC of the terminal device, where the algorithm supported by the terminal device is the algorithm supported by the universal integrated circuit card UICC.

In another possible implementation, the processing unit is further configured to receive third indication information from the bootstrapping server function network element by using the transceiver, where the third indication information indicates the terminal device to use a mobile equipment-based generic bootstrapping architecture GBA_ME mechanism; and verify the second message authentication code.

For technical effects brought by the eighth aspect or the optional implementations, refer to descriptions of the technical effects brought by the second aspect or the corresponding implementations.

Disclosed in a ninth aspect of embodiments of this application is an algorithm negotiation apparatus in a generic bootstrapping architecture, including at least one processor and a transceiver. The at least one processor is configured to communicate with another apparatus by using the transceiver, the memory is configured to store a computer program, and the processor is configured to invoke the computer program to perform the following operations:
receiving a first request message from the bootstrapping server function network element by using the transceiver; and
sending a first response message to the bootstrapping server function network element by using the transceiver, where the first response message includes an algorithm supported by the terminal device or second indication information, the algorithm supported by the terminal device includes a first algorithm and/or a second algorithm, and the second indication information indicates that the algorithm supported by the terminal device includes the second algorithm.

In a possible implementation, the first algorithm includes a secure hash algorithm 1, and the second algorithm includes a secure hash algorithm 256.

For technical effects brought by the ninth aspect or the optional implementations, refer to descriptions of the technical effects brought by the third aspect or the corresponding implementations.

Disclosed in a tenth aspect of embodiments of this application is a chip. The chip includes at least one processor and an interface circuit. Optionally, the chip further includes a memory. The memory, the interface circuit, and the at least one processor are connected to each other through lines. The at least one memory stores a computer program. When the computer program is executed by the processor, the method described in any one aspect or possible implementations of any one aspect is implemented.

Disclosed in an eleventh aspect of embodiments of this application is a computer-readable storage medium storing a computer program. When the computer program is executed by a processor, the method described in any one aspect or possible implementations of any one aspect is implemented.

Disclosed in a twelfth aspect of embodiments of this application is a computer program product. When the computer program product runs on a processor, the method described in any one aspect or possible implementations of any one aspect is implemented.

Disclosed in a thirteenth aspect of embodiments of this application is an algorithm negotiation system in a generic bootstrapping architecture, including a first apparatus and a second apparatus. The first apparatus is the apparatus described in the seventh aspect or any one possible implementation of the seventh aspect, and the second apparatus is the apparatus described in the ninth aspect or any one possible implementation of the ninth aspect.

### BRIEF DESCRIPTION OF DRAWINGS

FIG. 1 is a schematic diagram of a GBA according to an embodiment of this application;
FIG. 2 is a schematic diagram of a bootstrapping request procedure according to an embodiment of this application;
FIG. 3 is a schematic diagram of authentication vector generation according to an embodiment of this application;
FIG. 4 is a schematic flowchart of performing service access according to an embodiment of this application;
FIG. 5 is a schematic flowchart of an algorithm negotiation method in a generic bootstrapping architecture according to an embodiment of this application;
FIG. 6 is a schematic flowchart of an algorithm negotiation method in a generic bootstrapping architecture according to an embodiment of this application;
FIG. 7A to FIG. 7C are a schematic flowchart of an algorithm negotiation method in a generic bootstrapping architecture according to an embodiment of this application;
FIG. 8 is a schematic flowchart of an algorithm negotiation method in a generic bootstrapping architecture according to an embodiment of this application;
FIG. 9 is a schematic flowchart of an algorithm negotiation method in a generic bootstrapping architecture according to an embodiment of this application;
FIG. 10 is a schematic diagram of a structure of an algorithm negotiation apparatus in a generic bootstrapping architecture according to an embodiment of this application;
FIG. 11 is a schematic diagram of a structure of an algorithm negotiation apparatus in a generic bootstrapping architecture according to an embodiment of this application;
FIG. 12 is a schematic diagram of a structure of an algorithm negotiation apparatus in a generic bootstrapping architecture according to an embodiment of this application;
FIG. 13 is a schematic diagram of a structure of an algorithm negotiation apparatus in a generic bootstrapping architecture according to an embodiment of this application;
FIG. 14 is a schematic diagram of a structure of an algorithm negotiation apparatus in a generic bootstrapping architecture according to an embodiment of this application; and
FIG. 15 is a schematic diagram of a structure of an algorithm negotiation apparatus in a generic bootstrapping architecture according to an embodiment of this application.

### DESCRIPTION OF EMBODIMENTS

The following describes embodiments of this application with reference to the accompanying drawings in embodiments of this application.

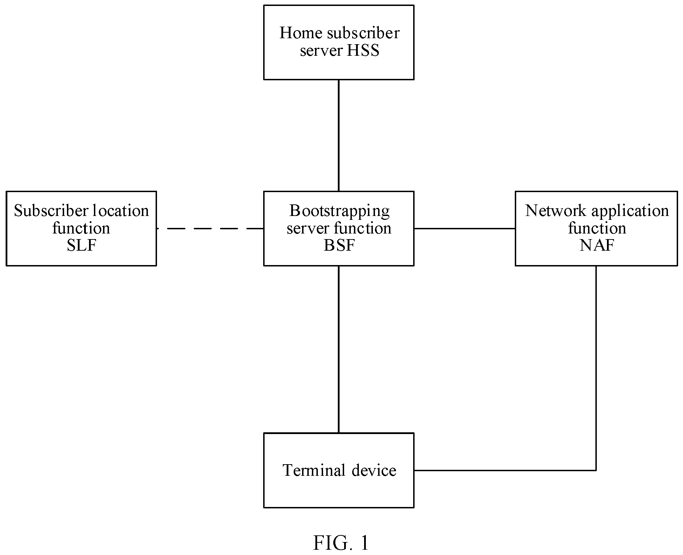

The 3rd Generation Partnership Project (3rd Generation Partnership Project, 3GPP) provides a security mechanism for mutual authentication and key generation between a terminal device and a bootstrapping server function (bootstrapping server function, BSF) in a network, to perform secure communication. A generic bootstrapping architecture (generic bootstrapping architecture, GBA) is a general mechanism for mutual authentication and key agreement that is established by BSFs in a terminal device and a network and defined by the 3GPP. As shown in FIG. 1, FIG. 1 is a schematic diagram of a GBA. The specific functions of logical entities in the GBA architecture are as follows.
(1) A bootstrapping server function (bootstrapping server function, BSF) may be referred to as a bootstrapping server function network element, and is located in a home network of a user. The BSF obtains GBA user security settings and an authentication vector from a home subscriber server (home subscriber server, HSS), completes authentication on a terminal device, and establishes a shared key (Ks). The BSF generates a NAF specific key (network application function specific key, NSK) based on the Ks, and provides a network application function (network application function, NAF) with the NSK.
(2) A network application function (network application function, NAF) may be referred to as a network application function network element. After receiving an application request from the terminal device, the NAF needs to obtain the NAF specific key NSK from the BSF. The BSF uses the NAF specific key NSK to protect communication with the terminal device.
(3) An HSS may be referred to as an HSS network element. All user security settings, user keys, user subscription data, and the like are stored in the HSS. The HSS can return the authentication vector to the BSF.
(4) Terminal device: The terminal device needs to support an authentication and key agreement (authentication and key agreement, AKA) protocol and a digest authentication (digest authentication) protocol of the 3rd Generation mobile communication network, and can perform two-way authentication with the bootstrapping service function, and generate a shared key Ks, so as to generate a specific key NSK based on the shared key Ks. The terminal device uses the specific key NSK to protect communication with the BSF.
(5) A subscriber location function (subscriber location function, SLF) may be referred to as a subscriber location function network element, and is for querying an HSS of a subscriber. The SLF is not a mandatory functional unit.

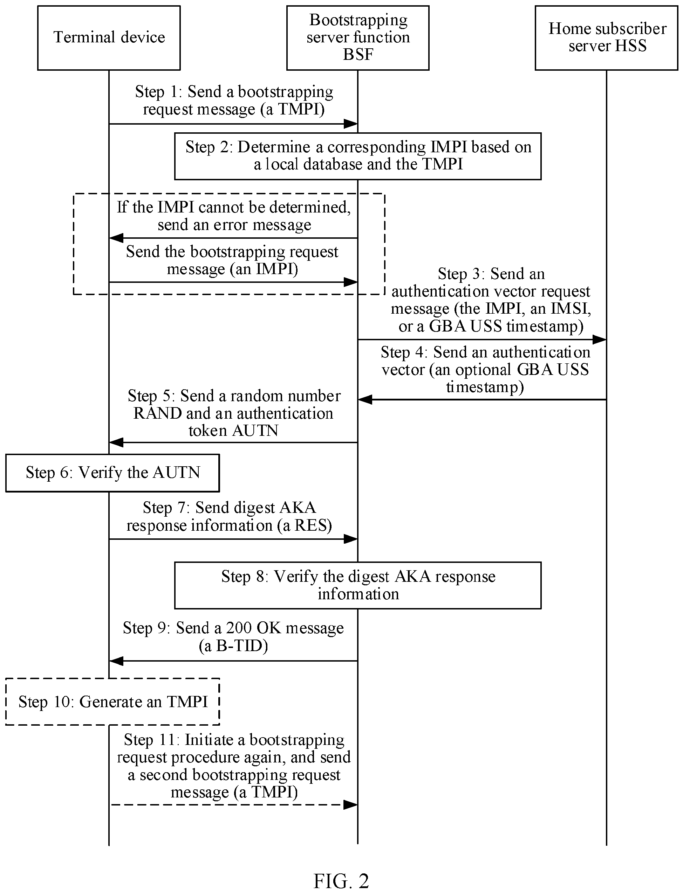

A GBA procedure usually includes two steps: (1) Perform a bootstrapping request procedure. The AKA protocol is for implementing the two-way authentication between the BSF and the terminal device. After the authentication succeeds, the terminal device and the BSF establish the shared key Ks. (2) Perform a service access process. The NSK is for protecting communication between the terminal device and the NAF. The bootstrapping request procedure is described below in detail. Details are shown in FIG. 2. When the terminal device expects to interact with the NAF and the terminal device determines that a bootstrapping procedure needs to be performed, the terminal device initiates the bootstrapping request procedure. Otherwise, the terminal device initiates the bootstrapping request procedure only when the terminal device receives bootstrapping indication information sent by the NAF to the terminal device or a lifetime of a key in the terminal device expires. The bootstrapping request procedure is specifically as follows.

Step 1: The terminal device sends a bootstrapping request (Bootstrapping Request) message to the BSF. If the terminal device has a temporary internet protocol multimedia private identity (temporary internet protocol multimedia private identity, TMPI), the bootstrapping request message carries the TMPI; or if the terminal device does not have the TMPI, the bootstrapping request message carries an internet protocol multimedia private identity (internet protocol multimedia private identity, IMPI).

Step 2: After receiving the bootstrapping request (Bootstrapping Request) message carrying the TMPI from the terminal device, the BSF queries a local database for an IMPI corresponding to the TMPI. If the BSF cannot find the corresponding IMPI, the BSF sends an error message to the terminal device. Correspondingly, after receiving the error message, the terminal device resends a bootstrapping request (Bootstrapping Request) message, where the bootstrapping request message carries the IMPI.

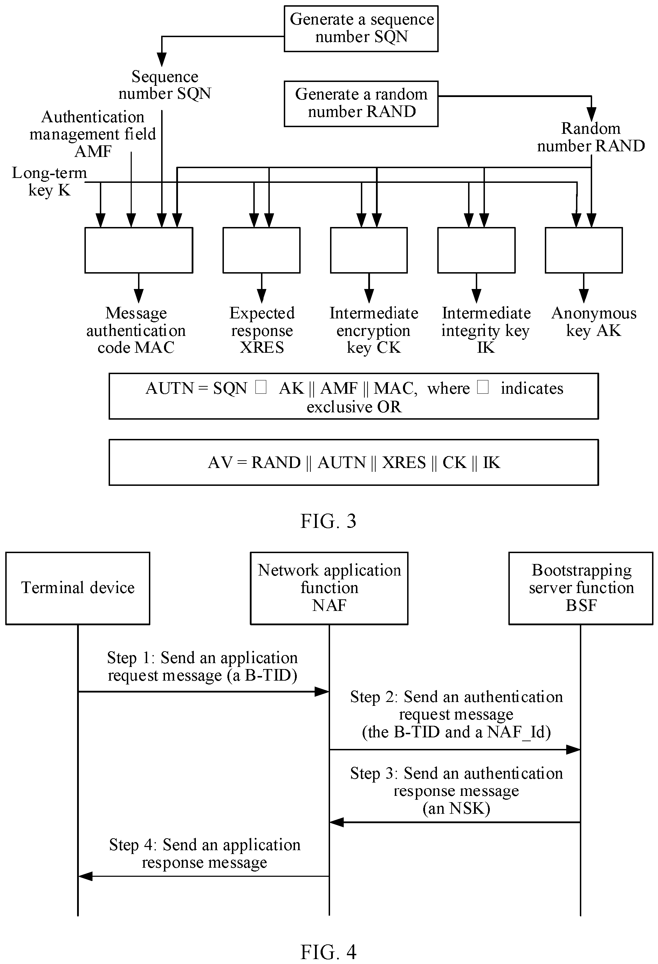

Step 3: The BSF sends an authentication vector request message to the HSS or a home location register (home location register, HLR), where the authentication vector request message carries the IMPI or the IMSI. Optionally, the authentication vector request message carries a GBA user security setting (user security setting, USS) timestamp. Step 4: The HSS/HLR generates an authentication vector (authentication vector, AV). AV = RAND ∥ AUTN ∥ XRES ∥ CK ∥ IK, where RAND is a random number, AUTN is an authentication token (authentication token, AUTN), XRES is an expected response (eXpected response, XRES), CK is an intermediate encryption key, IK is an intermediate integrity key, and ∥ indicates a concatenation operation. Generation of AV is shown in FIG. 3. CK, IK, and the expected response XRES are all generated based on a long-term key K and the random number RAND of the terminal device. AUTN = SQN⊕AK ∥ AMF ∥ MAC, where AMF is an authentication management field, SQN is a sequence number, both the terminal device and HSS store an SQN, AK is an anonymous key, MAC is a message authentication code, and ⊕ indicates an exclusive OR operation, where MAC is generated based on SQN, the K, AMF, and the random number RAND. The HSS/HLR sends the authentication vector AV to the BSF. If the HSS receives the GBA USS timestamp, the HSS compares the GBA USS timestamp with a locally stored timestamp. If the two timestamps are different, the HSS sends the GBAUSS to the BSF.

Step 5: The BSF sends the random number RAND and the authentication token AUTN to the terminal device.

Step 6: The terminal device computes CK and IK based on the received RAND and a locally stored long-term key by using a method same as that used by the HSS, and generates a response RES by using a method same as that used by the HSS to compute XRES. The terminal device verifies AUTN to determine that the received RAND and the authentication token AUTN are from a real network.

Step 7: The terminal device sends digest AKA response information generated based on the RES to the BSF.

Step 8: The BSF uses the XRES received from the HSS/HLR to verify the digest AKA response information. The BSF generates a shared key Ks = CK ∥ IK. The BSF generates a bootstrapping transaction identifier (B-TID) based on the random number RAND and a server name of the BSF. If user agent request-header information (a user agent request-header field) in a message received by the BSF from the terminal device includes a product token (product token) "3gpp-gba-tmpi", the BSF generates a TMPI. (When the terminal device communicates with the BSF, the user agent request-header information carried in the message sent to the BSF always includes the product token "3gpp-gba-tmpi"). Step 9: The BSF sends a 200 OK message to the terminal device, where the message carries the bootstrapping transaction identifier (B-TID), and indicates that the BSF authentication succeeds.

Step 10: The terminal device may generate a TMPI. If the user agent request-header information in a message of the BSF received by the terminal device includes the product token "3gpp-gba-tmpi", the terminal device generates the TMPI. (When the BSF communicates with the terminal device, the user agent request-header information carried in the message sent to the terminal device should always include the product token 3gpp-gba-tmpi). The terminal device and the BSF generate the TMPI by using a same parameter and method.

Step 11: After the terminal device has the TMPI locally, if the terminal device initiates a bootstrapping request procedure again, the terminal device sends, to the BSF, a second bootstrapping request message carrying the TMPI.

The GBA includes two mechanisms: a generic bootstrapping architecture with universal integrated circuit card-based enhancements (GBA_U) mechanism and a mobile equipment-based generic bootstrapping architecture (GBA_ME). In the GBA_ME mechanism, all GBA-related functions are performed by a mobile equipment (mobile equipment, ME), and a universal integrated circuit card (universal integrated circuit card, UICC) does not perceive the GBA-related functions. In the GBA_U mechanism, all GBA-related functions are performed by the ME and the UICC together. The foregoing bootstrapping procedure is also applicable to the GBA_U mechanism with a change in step 5 that the BSF determines, based on the GBA USS, to use the GBA_U mechanism. The BSF obtains MAC* based on a message authentication code MAC in a received authentication vector AV, MAC* = MAC⊕Trunc (SHA-1(IK)), where Trunc indicates a truncation operation, and SHA-1 is a secure hash algorithm 1. An AUTN* is determined based on MAC*, where AUTN* = SQ⊕NAK ∥ AMF ∥ MAC*. Then the BSF sends a random number RAND and AUTN* to the terminal device. Another secure hashing method may be alternatively used to compute MAC*. In step 6, the ME sends the received random number RAND and AUTN* to the UICC. The UICC computes CK and IK based on the received random number RAND and the locally stored long-term key of the terminal device by using a same method as that used on a network side, and generates the response RES by using a same method as that used by the HSS to generate the expected response XRES. The UICC generates MAC, verifies AUTN*, and the UICC sends the RES to the ME.

When the terminal device expects to communicate with the NAF, and the terminal device and the NAF negotiate to use a GBA mechanism, the terminal device uses a security association established in the bootstrapping request procedure for communication. As shown in FIG. 4, FIG. 4 represents execution of a service access process. Specifically: Step 1: The terminal device generates an NSK based on the shared key Ks in the bootstrapping request procedure. The terminal device sends an application request (Application Request) message to the NAF, where the application request message carries a bootstrapping transaction identifier (B-TID). The application request message is protected based on a specific key NSK. Step 2: The NAF sends an authentication request (Authentication Request) message to the BSF based on the received bootstrapping transaction identifier (B-TID), where the authentication request message carries the bootstrapping transaction identifier (B-TID) and a NAF identifier (NAF_Id). Step 3: The BSF finds a corresponding shared key Ks based on the bootstrapping transaction identifier (B-TID) to generate a specific key NSK, and then sends the specific key NSK to the NAF. Step 4: The NAF sends an application response message to the terminal device, where the response message is protected by using the specific key NSK. In this manner, secure communication can be performed between the NAF and the terminal device based on the specific key NSK.

In the following, some terms in this application are described, so as to help persons skilled in the art have a better understanding.
(1) An international mobile subscriber identity (international mobile subscriber identity, IMSI) identifies a terminal device. An IMSI consists of a mobile country code (mobile country code, MCC), a mobile network code MCC (mobile network code, MNC), and a mobile subscription identification number (mobile subscription identification number, MSIN). The MCC consists of three digits. The MNC may consist of two or three digits, which is determined by the MCC. The value of the MSIN is allocated by a carrier. For example, if an IMSI is 310150123456789, an MCC is 310, an MNC is 150, and an MSIN is 123456789.
(2) An internet protocol multimedia private identity (internet protocol multimedia private identity, IMPI) identifies a terminal device. The IMPI is derived from the IMSI. The IMPI is in a format of "<IMSI>@ims.mnc<MNC>.mcc<MCC>.3gppnetwork.org". For example, if an IMSI of a terminal device is 234150999999999 (that is, MCC = 234, MNC = 15, and MSIN = 0999999999), an IMPI of the terminal device is 234150999999999@ims.mnc015 .mcc234.3 gppnetwork.org.
(3) A temporary internet protocol multimedia private identity (temporary internet protocol multimedia private identity, TMPI) identifies a terminal device, and is generated by a terminal device and a BSF. If a TMPI is TEMP@tmpi.bsf.3gppnetwork.org, TEMP generation parameters include: a character gba-me, a random number RAND, an IMPI, and CK ∥ IK.
(4) A NAF-specific key NSK is for protecting communication between a terminal device and a NAF. Parameters generated by the specific key NSK include Ks (that is, CK ∥ IK), the character "gba_me" or "gba_u", the random number RAND, the IMPI, and a NAF identifier (NAF-Id). In the case that a GBA_U is used, the NSK is generated using the character gba_u. In the case that the GBA_U is not used, the NSK is generated using the character gba_me.
(5) A generic public subscription identifier (generic public subscription identifier, GPSI) identifies a terminal device. The GPSI includes: a GPSI type and a GPSI value. The GPSI type is a mobile subscriber ISDN number (MSISDN) type or an external identifier (External Identifier) type. In the case of the MSISDN type, the GPSI value is MSISDN. In the case of the external identifier type, the GPSI value is external identifier. The MSISDN consists of a country code (country code, CC), a national destination code (national destination code, NDC), and a subscriber number (subscriber number, SN). The external identifier is in a format of username@realm, where username indicates a user name, and realm indicates a domain.

In the foregoing method, in the GBA_U mechanism, an old-version BSF computes MAC* by using a secure hash algorithm 1 (SHA-1), or a UICC in an old-version terminal device verifies AUTN* by using the secure hash algorithm 1 (SHA-1). The SHA-1 algorithm is an insecure algorithm. In 5G, a new-version terminal device and a new-version BSF use an SHA-26 secure algorithm instead of SHA-1. Therefore, when the old-version terminal device communicates with the new-version BSF or the new-version terminal device communicates with the old-version BSF, AUTN* verification fails because the terminal device and the BSF use different algorithms, resulting in a GBA failure. Therefore, how to resolve incompatibility between old and new versions is a technical problem to be resolved by persons skilled in the art.

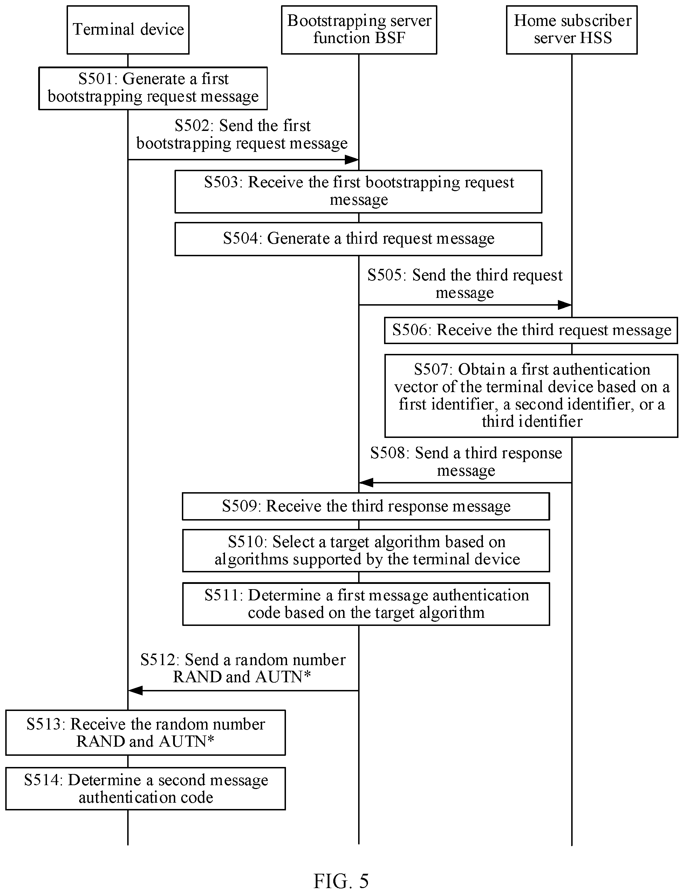

FIG. 5 shows an algorithm negotiation method in a generic bootstrapping architecture according to an embodiment of this application. The method includes but is not limited to the following steps.

Step S501: A terminal device generates a first bootstrapping request message.

Specifically, the first bootstrapping request message includes an identifier of the terminal device, and/or first indication information, and/or an algorithm supported by the terminal device. The identifier of the terminal device includes a first identifier, a second identifier, or a third identifier. The algorithm supported by the terminal device may include a first algorithm and/or a second algorithm. In an example, the first algorithm may include a secure hash algorithm 1 (SHA-1), and the second algorithm may include a secure hash algorithm 2 (SHA2). SHA2 may include one or more of a secure hash algorithm 224 (SHA-224), a secure hash algorithm 256 (SHA-256), a secure hash algorithm 384 (SHA-384), or a secure hash algorithm 512 (SHA-512). The first algorithm may include one or more algorithms, and the second algorithm may include one or more algorithms. This is not limited in this embodiment of this application. For example, the first algorithm may include the secure hash algorithm 1 (SHA-1), and the second algorithm may include the secure hash algorithm 256 (SHA-256). The first indication information indicates that the algorithm supported by the terminal device includes the second algorithm. The first identifier is used by a BSF to determine, based on the first identifier, that the algorithm supported by the terminal device includes the second algorithm. The second identifier is used by the BSF to determine, based on the second identifier, that the terminal device supports the first algorithm. In a possible implementation, the first indication information may alternatively be the first identifier. This is not limited in this embodiment of this application. In this embodiment of this application, the second identifier may also be referred to as a second identifier of the terminal device, and the first identifier may also be referred to as a first identifier of the terminal device. This is not limited in this embodiment of this application.

In the document of this application, the algorithm supported by the terminal device includes the second algorithm, indicating that the terminal device supports the second algorithm, or the terminal device supports the first algorithm and the second algorithm.

Specifically, the first identifier is generated based on the second identifier. In an example, the first identifier is generated based on the second identifier and an identity public key (identity public key, IPK). For example, the first identifier is generated by encrypting the second identifier by using the IPK. In other words, the first identifier may be an encrypted identifier of the terminal device, and the second identifier may be a plaintext identifier of the terminal device. In this embodiment of this application, the identity public key IPK may be a public key on a network side, or may be another public key. This is not limited in this embodiment of this application. The identity public key may be configured on an HSS, and/or UDM, and/or the BSF. In an example, the first identifier is a subscription concealed identifier (subscription concealed identifier, SUCI) of the terminal device. Assuming that the first identifier is an SUCI, the second identifier is an SUPI, and the first identifier SUCI is generated by encrypting the second identifier SUPI by using the public key on the network side.

In this embodiment of this application, when the second identifier is an SUPI of the terminal device, the first identifier is referred to as an SUPI*; when the second identifier is an IMPI of the terminal device, the first identifier is referred to as an IMPI*; when the second identifier is an IMSI of the terminal device, the first identifier is referred to as an IMSI*; or when the second identifier is a GPSI of the terminal device, the first identifier is referred to as a GPSI*.

In another example, the first bootstrapping request message includes a third identifier of the terminal device. In this embodiment of this application, the third identifier of the terminal device may be referred to as a third identifier. The third identifier is a GPSI of the terminal device or a GPSI of an external identifier type. When the third identifier is the GPSI of the terminal device, the first identifier is referred to as a GPSI*, and the third identifier is used by the BSF to determine, based on the third identifier, that the algorithm supported by the terminal device includes the second algorithm.

Optionally, in a possible implementation, before the terminal device generates the first bootstrapping request message, the terminal device or a mobile equipment (mobile equipment, ME) of the terminal device reads an algorithm supported by a universal integrated circuit card UICC of the terminal device, where the algorithm supported by the terminal device and included in the first bootstrapping request message is the algorithm supported by the UICC. In an example, assuming that the ME of the terminal device reads that the algorithm supported by the UICC of the terminal device is SHA-1 and SHA-256, the algorithm supported by the terminal device and included in the first bootstrapping request message is SHA-1 and SHA-256.

Step S502: The terminal device sends the first bootstrapping request message to the BSF.

Specifically, the first bootstrapping request message includes the algorithm supported by the terminal device, the first indication information, the first identifier, the second identifier, or the third identifier.

Step S503: The BSF receives the first bootstrapping request message from the terminal device.

Specifically, the first bootstrapping request message includes the algorithm supported by the terminal device, the first indication information, the first identifier, the second identifier, or the third identifier.

In a possible implementation, the BSF determines, based on the first indication information, that the algorithm supported by the terminal device includes the second algorithm. For example, assuming that the second algorithm is SHA-256, the BSF determines, based on the first indication information, that the algorithm supported by the terminal device is SHA-256.

In a possible implementation, the B SF determines, based on the first identifier or the third identifier, that the algorithm supported by the terminal device includes the second algorithm. For example, assuming that the first identifier is an SUPI^{∗} and the second algorithm is SHA-256, the BSF determines, based on the first identifier SUPI*, that the algorithm supported by the terminal device includes the second algorithm SHA-256. Assuming that the third identifier is a GPSI and the second algorithm is SHA-256, the BSF determines, based on the third identifier GPSI, that the algorithm supported by the terminal device includes the second algorithm SHA-256.

In a possible implementation, the BSF determines, based on the second identifier, that the terminal device supports the first algorithm. For example, assuming that the second identifier is an IMPI or an SUPI and the first algorithm is SHA-1, the BSF determines, based on the second identifier IMPI or SUPI, that the terminal device supports the first algorithm SHA-1.

Step S504: The BSF generates a third request message.

Specifically, the third request message includes the first identifier, the second identifier, or the third identifier, and the third request message is for obtaining a first authentication vector of the terminal device, or is for invoking a first authentication service of the HSS to obtain the first authentication vector of the terminal device.

Optionally, before generating the third request message, the BSF determines to generate the third request message or determines to send the third request message to the HSS. The BSF may determine, based on the received first identifier or third identifier of the terminal device, to generate the third request message or determine to send the third request message to the HSS.

Optionally, the BSF may further determine, based on the first identifier or the third identifier, to generate a fifth identifier (TMPI*), or that the terminal device supports a 5g GBA, or that the terminal device is a 5G terminal device, or to perform authentication and a key agreement of the 5G GBA.

In a possible implementation, if the BSF receives the first identifier, the BSF obtains the second identifier based on the received first identifier and the IPK, and includes the second identifier in the third request message. That the BSF obtains the second identifier based on the received first identifier and the IPK may be that the BSF obtains the second identifier by decrypting the first identifier by using the IPK. For example, assuming that the first identifier is an IMPI*, the BSF determines, based on the first identifier and the IPK, that the second identifier is an IMPI.

In a possible implementation, when the BSF receives the first identifier, the BSF includes the received first identifier in the third request message. In a possible implementation, when the BSF receives the third identifier, the BSF includes the received third identifier in the third request message. In a possible implementation, when the BSF receives the second identifier, the BSF includes the received second identifier in the third request message.

Step S505: The BSF sends the third request message to the HSS.

Specifically, the third request message includes the first identifier, the second identifier, or the third identifier. The third request message is for obtaining the first authentication vector of the terminal device, or is for invoking the first authentication service of the HSS, to obtain the first authentication vector of the terminal device.

Step S506: The HSS receives the third request message from the BSF.

Specifically, the third request message includes the first identifier, the second identifier, or the third identifier.

Step S507: The HSS obtains the first authentication vector of the terminal device based on the received first identifier, second identifier, or third identifier.

Specifically, the first authentication vector is implemented by any one of the following possible implementations. In a possible implementation, the first authentication vector may be an authentication vector AV, where AV = RAND ∥ AUTN ∥ XRES ∥ CK ∥ IK, RAND is a random number, AUTN is an authentication token, XRES indicates an expected response, CK is an intermediate encryption key, and IK is an intermediate integrity key. Details are described above, and are not described herein again. In another possible implementation, the first authentication vector may alternatively be an EAP-AKA' authentication vector corresponding toEAP - AKA' that is generated by the UDM by using an improved extensible authentication protocol method for 5th generation authentication and key management (improved extensible authentication protocol method for 3rd generation authentication and key agreement, EAP - AKA'). The authentication vector EAP - AKA' includes a random number RAND, an authentication credential AUTN, XRES, a first intermediate encryption key CK', and a first intermediate integrity key IK'. Generation parameters of the first intermediate encryption key CK' and the first intermediate integrity key IK' include an intermediate encryption key CK, an intermediate integrity key IK, a sequence number SQN, an anonymous key AK, and a serving network-name SN-Name, where the serving network-name SN-Name is generated by the UDM or sent by the HSS. The serving network-name SN-Name includes a service code and a serving network identifier SN-Id. The serving network identifier SN-Id includes a mobile country code MCC and a mobile network code MNC. In an example, MCC = 000, and MNC = 00 or MNC = 000. In another example, MCC = 999, and MNC = 99 or MNC = 999. The service code is a character string including "5g" and/or "gba".

In a possible implementation, the third request message includes the second identifier or the third identifier, and the HSS generates the first authentication vector of the terminal device based on the second identifier or the third identifier. In another possible implementation, the third request message includes the first identifier, the HSS obtains the second identifier based on the first identifier and the IPK, and the HSS generates the first authentication vector of the terminal device based on the second identifier. That the HSS obtains the second identifier based on the first identifier and the IPK may be, for example, the HSS obtains the second identifier by decrypting the first identifier by using the IPK. In a possible implementation, the HSS sends a second request message to the unified data management (unified data management, UDM) based on the received first identifier, second identifier, or third identifier. Specifically, the second request message includes the first identifier, the second identifier, or the third identifier. The second request message is for requesting the UDM to generate the first authentication vector of the terminal device, or is for invoking a first authentication service of the UDM, to obtain the first authentication vector of the terminal device. After generating the first authentication vector, the UDM sends, to the HSS, a second response message including the first authentication vector.

In another possible implementation, the HSS obtains the second identifier based on the received first identifier and the IPK, and then the HSS sends the second request message to the UDM, where the second request message includes the obtained second identifier, so that the UDM generates the first authentication vector of the terminal device based on the second identifier. After generating the first authentication vector, the UDM sends, to the HSS, a second response message including the first authentication vector.

Step S508: The HSS sends a third response message to the BSF.

Specifically, the third response message includes the first authentication vector of the terminal device.

Step S509: The BSF receives the third response message from the HSS.

Specifically, the third response message includes the first authentication vector of the terminal device.

Step S510: The BSF selects a target algorithm based on the algorithm supported by the terminal device.

Specifically, the algorithm supported by the terminal device includes the first algorithm and/or the second algorithm. For that the BSF determines the algorithm supported by the terminal device, refer to descriptions in step S503. Details are not described herein again.

In a possible implementation, when the algorithm supported by the terminal device includes the second algorithm, the BSF selects the second algorithm as the target algorithm. For example, the first algorithm is SHA-1, the second algorithm is SHA-256, the algorithm supported by the terminal device includes SHA-1 and SHA-256, and the BSF selects SHA-256 as the target algorithm. In another example, the second algorithm is SHA-256, the algorithm supported by the terminal device is SHA-256, and the BSF selects SHA-256 as the target algorithm. In a possible implementation, when the algorithm supported by the terminal device is the first algorithm, the BSF selects the first algorithm as the target algorithm. For example, when the first algorithm is SHA-1 and the algorithm supported by the terminal is SHA-1, the BSF selects SHA-1 as the target algorithm.

In a possible implementation, before the BSF selects a target algorithm based on the algorithm supported by the terminal device, the BSF determines to use a generic bootstrapping architecture with universal integrated circuit card-based enhancements GBA_U mechanism.

In a possible implementation, after the B SF selects a target algorithm based on the algorithm supported by the terminal device, the BSF sends the target algorithm to the terminal device. In an example, assuming that after the BSF selects SHA-256 as the target algorithm based on the algorithm supported by the terminal device, the BSF sends the target algorithm SHA-256 to the terminal device.

In the foregoing method, in a manner of sending the target algorithm to the terminal device, it can be ensured that the terminal device and the BSF verify AUTN* by using a same algorithm, thereby resolving algorithm incompatibility between the terminal device and the BSF.

Optionally, before the BSF selects a target algorithm based on the algorithm supported by the terminal device, the BSF determines whether the BSF supports the algorithm supported by the terminal device.

Specifically, the algorithm supported by the terminal device includes the first algorithm and/or the second algorithm. In an example, the first algorithm is SHA-1, and the second algorithm is SHA-256.

In a possible implementation, the B SF supports the algorithm supported by the terminal device. For example, assuming that the algorithm supported by the terminal device is SHA-1 and an algorithm supported by the BSF includes SHA-1, the BSF supports the algorithm supported by the terminal device. In another example, assuming that the algorithm supported by the terminal device is SHA-256 and the algorithm supported by the BSF includes SHA-256, the BSF supports the algorithm supported by the terminal device. In another example, assuming that the algorithm supported by the terminal device is SHA-1 and SHA-256 and the algorithm supported by the BSF includes SHA-1 and SHA-256, the BSF supports the algorithm supported by the terminal device.

In a possible implementation, the BSF does not support the algorithm supported by the terminal device. For example, assuming that the algorithm supported by the terminal device is SHA-256 and the algorithm supported by the BSF does not include SHA-256, the BSF does not support the algorithm supported by the terminal device. In another example, assuming that the algorithm supported by the terminal device includes SHA-1 and SHA-256 and the algorithm supported by the BSF does not include SHA-256 and SHA-1, the BSF does not support the algorithm supported by the terminal device.

In a possible implementation, after the BSF does not support the algorithm supported by the terminal device, the BSF sends, to the terminal device, third indication information indicating the terminal device to use a mobile equipment-based generic bootstrapping architecture GBA_ME mechanism. After the terminal device receives the third indication information, the terminal device uses the GBA_ME mechanism, to be specific, verifies a second message authentication code MAC or the AUTN. In other words, when the terminal device uses the GBA_ME mechanism, correspondingly, the terminal device receives the second message authentication code MAC from the BSF.

The BSF may select the target algorithm at any time point after the BSF receives the first bootstrapping request message. This is not limited in this application.

Step S511: The BSF determines a first message authentication code based on the target algorithm.

Specifically, the first message authentication code is MAC*.

In an example, assuming that the target algorithm is SHA-256, the BSF obtains the first message authentication code MAC* based on the second message authentication code MAC in the received first authentication vector, MAC* = MAC⊕Trunc (SHA-256(IK)), where Trunc indicates a truncation operation.

In a possible implementation, after the BSF determines a first message authentication code based on the target algorithm, the BSF determines AUTN* based on the first message authentication code MAC*, where AUTN* = SQN⊕AK ∥ AMF ∥ MAC*, AMF is an authentication management field, SQN is a sequence number, both the terminal device and the HSS store SQN, and AK is an anonymous key.

In a possible implementation, the BSF receives a second message authentication code (MAC) from the HSS, and then the BSF determines the first message authentication code (MAC*) based on the target algorithm and the second message authentication code (MAC). In an example, assuming that the target algorithm is SHA-256, the BSF determines MAC* = MAC⊕Trunc (SHA-256(IK)) based on the target algorithm SHA-256 and the second message authentication code, where Trunc indicates a truncation operation.

Optionally, before the BSF determines the first message authentication code, the BSF determines to use the GBA_U mechanism.

Step S512: The BSF sends the random number RAND and AUTN* to the terminal device.

Specifically, AUTN* includes the first message authentication code MAC*.

Optionally, the BSF further sends the target algorithm to the terminal device.

Step S513: The terminal device receives the random number RAND and AUTN* from the BSF.

Possibly, the terminal device receives the target algorithm from the BSF.

Step S514: The terminal device determines the second message authentication code.

Specifically, the first message authentication code may be MAC*, the second message authentication code may be MAC, and the second message authentication code is for authenticating the BSF.

In a possible implementation, that the terminal device determines the second message authentication code includes: If the terminal device receives the target algorithm, the terminal device determines the second message authentication code based on the target algorithm and the first message authentication code; or if the terminal device does not receive the target algorithm and the terminal device supports the first algorithm and the second algorithm, the terminal device determines the second message authentication code based on the first algorithm and the first message authentication code.

In an example, assuming that the target algorithm is SHA-256 and the first message authentication code is MAC*, where MAC* = MAC⊕Trunc (SHA-256(IK)), and the terminal device determines MAC by using SHA-256 and MAC*.

Specifically, after the terminal device receives the random number RAND and AUTN*, the terminal device or the UICC computes the IK by using a same method as that used by a network side device, and computes MAC = MAC* ⊕Trunc (SHA-256(IK)). Further, the terminal device or the UICC may further compute AUTN = SQN ⊕AK ∥ AMF ∥ MAC, and verify that the AUTN is from an authorized network.

Optionally, before the terminal device computes the second message authentication code, the terminal device determines to use the GBA_U mechanism.

In the method shown in FIG. 5, the BSF determines the target algorithm based on the algorithm supported by the terminal device, indication information, or the identification information of the terminal device in a bootstrapping request message received from the terminal device, and then sends the target algorithm to the terminal device. This avoids that the terminal device and the BSF use different algorithms to verify AUTN*. Therefore, it is ensured that the BSF and the terminal device use a same algorithm, and algorithm incompatibility between the terminal device and the BSF is resolved.

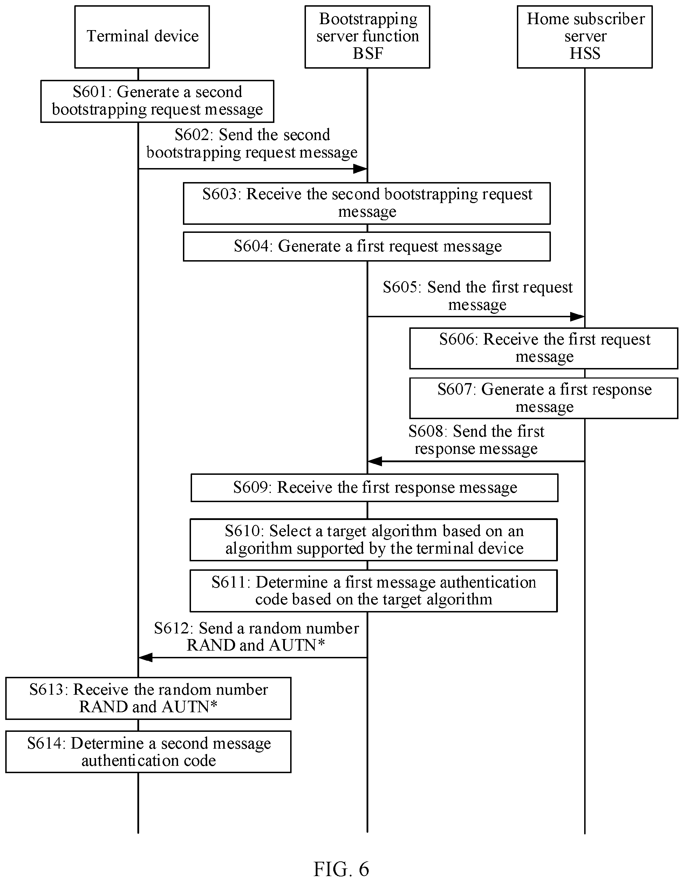

FIG. 6 shows an algorithm negotiation method in a generic bootstrapping architecture according to an embodiment of this application. The method includes but is not limited to the following steps.

Step S601: A terminal device generates a second bootstrapping request message.

Step S602: The terminal device sends the second bootstrapping request message to the BSF.

Step S603: The BSF receives the second bootstrapping request message from the terminal device.

Step S604: The BSF generates a first request message.

Step S605: The BSF sends the first request message to an HSS.

Specifically, the first request message is for obtaining a first authentication vector of the terminal device, or is for invoking a first authentication service of the HSS to obtain the first authentication vector of the terminal device. Step S606: The HSS receives the first request message from the BSF.

Step S607: The HSS generates a first response message.

Specifically, the first response message includes the first authentication vector of the terminal device. A possible implementation of the first authentication vector of the terminal device is described in step S507, and details are not described herein again. The first response message includes an algorithm supported by the terminal device or second indication information, and the algorithm supported by the terminal device includes a first algorithm and/or a second algorithm. In an example, the first algorithm may include a secure hash algorithm 1 (SHA-1), and the second algorithm may include a secure hash algorithm 2 (SHA2). SHA2 may include one or more of a secure hash algorithm 224 (SHA-224), a secure hash algorithm 256 (SHA-256), a secure hash algorithm 384 (SHA-384), or a secure hash algorithm 512 (SHA-512). The first algorithm may include one or more secure hash algorithms, and the second algorithm may include one or more secure hash algorithms. This is not limited in this embodiment of this application. For example, the first algorithm may be the secure hash algorithm 1 (SHA-1), and the second algorithm may be the secure hash algorithm 256 (SHA-256). The second indication information indicates that the algorithm supported by the terminal device includes the second algorithm. In an example, assuming that the second algorithm is SHA-256, the second indication information indicates the terminal device to support SHA-256.

Step S608: The HSS sends the first response message to the BSF.

The first response message includes the algorithm supported by the terminal device or the second indication information, the algorithm supported by the terminal device includes the first algorithm and/or the second algorithm, and the second indication information indicates that the algorithm supported by the terminal device includes the second algorithm.

Step S609: The BSF receives the first response message from the HSS.

Specifically, the first response message includes the first authentication vector of the terminal device. The first response message includes the algorithm supported by the terminal device or the second indication information, the algorithm supported by the terminal device includes the first algorithm and/or the second algorithm, and the second indication information indicates that the algorithm supported by the terminal device includes the second algorithm. In a possible implementation, the BSF determines, based on the second indication information, that the algorithm supported by the terminal device includes the second algorithm. For example, assuming that the second algorithm is SHA-256, the BSF determines, based on the second indication information, that the algorithm supported by the terminal device is SHA-256.

For step S610 to step S614, refer to step S510 to step S514, and details are not described herein again.

In the method shown in FIG. 6, the BSF determines the target algorithm based on the algorithm supported by the terminal device or indication information in a response message received from the HSS, and then sends the target algorithm to the terminal device. This avoids that the terminal device and the BSF use different algorithms to verify AUTN*. Therefore, it is ensured that the BSF and the terminal device use a same algorithm, and algorithm incompatibility between the terminal device and the BSF is resolved.

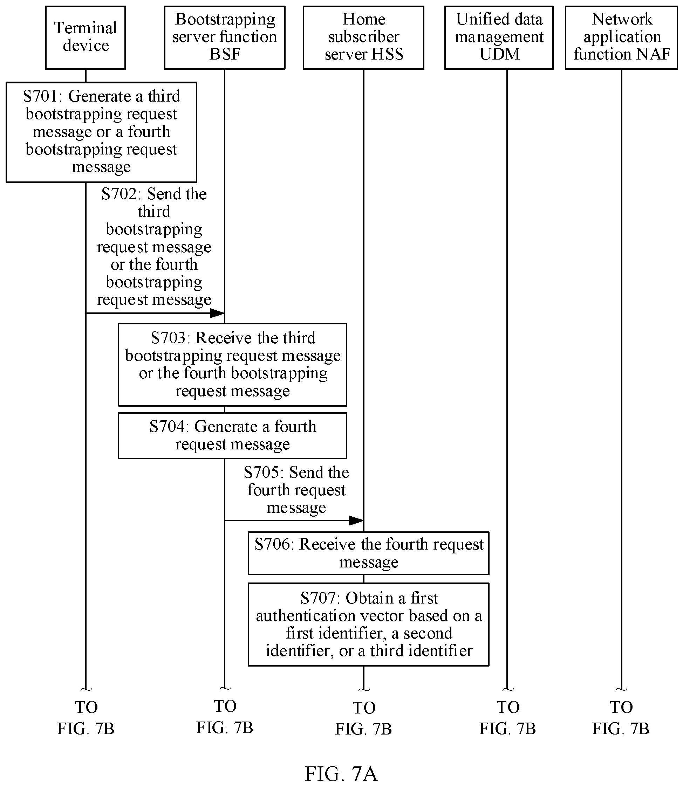

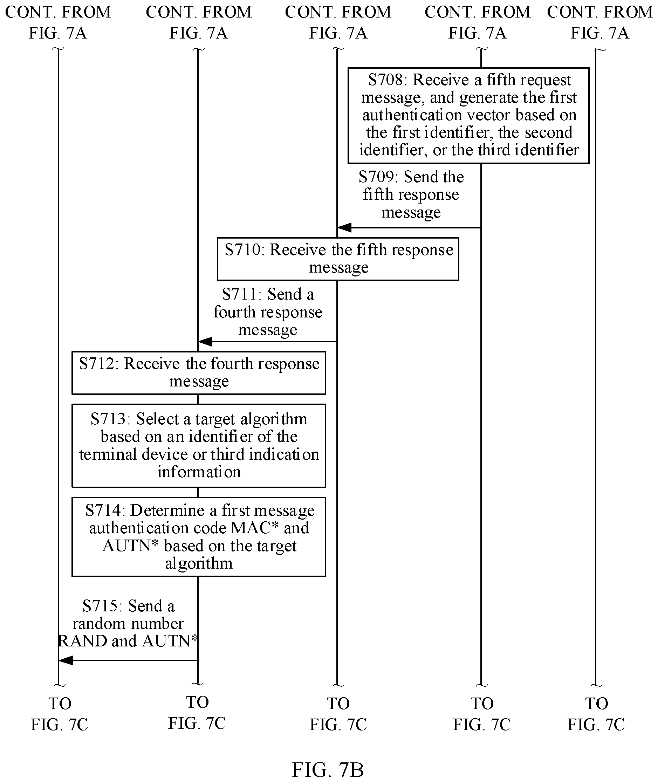

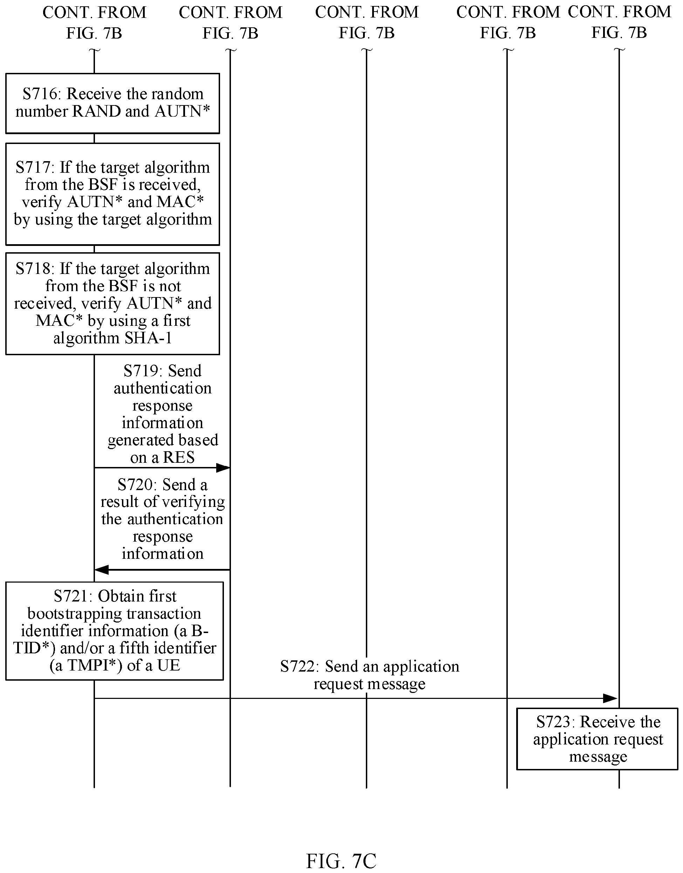

FIG. 7A to FIG. 7C show an algorithm negotiation method in a generic bootstrapping architecture according to an embodiment of this application. The method includes but is not limited to the following steps.

Step S701: A terminal device generates a third bootstrapping request message or a fourth bootstrapping request message.

In an example, the third bootstrapping request message includes a first identifier of the terminal device, or the first identifier of the terminal device and third indication information, or a second identifier. In this embodiment of this application, the first identifier of the terminal device may also be referred to as a first identifier, and the second identifier of the terminal device may also be referred to as a second identifier. The first identifier is generated based on the second identifier. The first identifier does not involve privacy of the terminal device, and the second identifier involves the privacy of the terminal device. The second identifier includes one of a subscription permanent identifier (subscription permanent identifier, SUPI) of the terminal device, an internet protocol multimedia private identity IMPI of the terminal device, an international mobile subscriber identity IMSI of the terminal device, or a GPSI.

In an example, the first identifier is generated based on the second identifier and an identity public key (identity public key, IPK). For example, the first identifier is generated by encrypting the second identifier by using the IPK. In other words, the first identifier may be an encrypted identifier of the terminal device, and the second identifier may be a plaintext identifier of the terminal device. In this embodiment of this application, the identity public key IPK may be a public key on a network side. The identity public key is configured on an HSS, and/or UDM, and/or a BSF. In an example, the first identifier is a subscription concealed identifier (subscription concealed identifier, SUCI) of the terminal device. Assuming that the first identifier is an SUCI, the second identifier is an SUPI, and the first identifier SUCI is generated by encrypting the second identifier SUPI by using the public key on the network side.

In this embodiment of this application, when the second identifier is the SUPI of the terminal device, the first identifier is referred to as an SUPI*; when the second identifier is the IMPI of the terminal device, the first identifier is referred to as an IMPI*; when the second identifier is the IMSI of the terminal device, the first identifier is referred to as an IMSI*; or when the second identifier is the GPSI of the terminal device, the first identifier is referred to as a GPSI*. In another example, the third bootstrapping request message includes a third identifier of the terminal device, or the third identifier of the terminal device and the third indication information. In this embodiment of this application, the third identifier of the terminal device may be referred to as a third identifier. The third identifier is the GPSI of the terminal device or a GPSI of an external identifier type. When the third identifier is the GPSI of the terminal device, the first identifier is referred to as a GPSI*.

In another example, the third indication information indicates the BSF to generate a fifth identifier (TMPI*) of the terminal device, or indicating the terminal device to support a 5g GBA, or indicating the BSF to send a first request message, or indicating that the terminal device is a 5G terminal device, or indicating to perform authentication and a key agreement of the 5G GBA, or indicating that an algorithm supported by the terminal device includes a second algorithm. In this embodiment of this application, the fifth identifier of the terminal device may also be referred to as a fifth identifier.

In a possible implementation, the third indication information is a character for identifying 5G in user agent request-header information in the third bootstrapping request message. Possibly, the character for identifying 5G is a character including "5" or "5g", for example, "3gpp-5gba-tmpi", "3gpp-gba-5tmpi", "3gpp-5g-gba-tmpi", or "3gpp-gba-5gtmpi". The third indication information is included in the third bootstrapping request message, so that resources can be appropriately used.

In a possible implementation, if the terminal device locally includes the fifth identifier (TMPI*), the terminal device sends a fourth bootstrapping request message to the BSF, where the fourth bootstrapping request message includes the fifth identifier (TMPI*), or the fifth identifier and the third indication information. Parameters for generating the fifth identifier (TMPI*) include TEMP* and a BSF domain name*. For example, the fifth identifier is TEMP^{∗}@BSF domain name*. Parameters for generating the TEMP* include one or more of the following: a random number RAND, a 5G GBA key, the second identifier of the terminal device, an identifier of the BSF, and the character for identifying 5G. The 5G GBA key is generated based on CK and IK, and the character for identifying 5G may include "5", and/or "5g", and/or "5g-gba", and/or "5g-gba-me", and/or "5g-gba-u", and/or "gba", and/or "5gba", and/or "5gba-me", and/or "5gba-u", and/or "5gba." The BSF domain name* may include the character for identifying 5G.

Possibly, the BSF can determine, based on the fifth identifier, that the algorithm supported by the terminal device includes the second algorithm.

In a possible implementation, before the terminal device sends the third bootstrapping request message to the BSF, the terminal device generates the first identifier based on the second identifier and an identity public key (identity public key, IPK). For example, the terminal device encrypts the second identifier by using the identity public key IPK to generate the first identifier.

In a possible implementation, before the terminal device sends the fourth bootstrapping request message to the BSF, the terminal device generates the fifth identifier. The parameters for generating the fifth identifier are described above. Compared with a manner that the third bootstrapping request message directly carries the second identifier, that is, a plaintext identifier of the terminal device, a manner that the third bootstrapping request message or the fourth bootstrapping request message includes the first identifier can avoid leakage of privacy information of the terminal device, thereby improving communication security.

Step S702: The terminal device sends the third bootstrapping request message or the fourth bootstrapping request message to the bootstrapping server function BSF.

Specifically, the third bootstrapping request message includes any one of the following: the first identifier, the first identifier and third indication information, the third identifier, or the third identifier and the third indication information. The fourth bootstrapping request message includes the fifth identifier, or the fifth identifier and the third indication information.

Step S703: The BSF receives the third bootstrapping request message or the fourth bootstrapping request message from the terminal device.

Specifically, the third bootstrapping request message includes the first identifier or the third identifier, and the first identifier is generated based on the second identifier. The third identifier is the GPSI of the terminal device or the GPSI of an external identifier type. The fourth bootstrapping request message includes the fifth identifier. Optionally, the third bootstrapping request message or the fourth bootstrapping request message further includes the third indication information.

In a possible implementation, the BSF determines, based on the first identifier, the third identifier, the third indication information, or the fifth identifier, that the algorithm supported by the terminal device is the second algorithm.

In a possible implementation, the BSF determines, based on the second identifier, that the algorithm supported by the terminal device is the first algorithm.

Step S704: The BSF generates a fourth request message.

Specifically, the fourth request message includes the first identifier, the second identifier, or the third identifier, and the fourth request message is for obtaining a first authentication vector of the terminal device, or is for invoking a first authentication service of the HSS to obtain the first authentication vector of the terminal device.

Optionally, before generating the fourth request message, the BSF determines to generate the fourth request message or determines to send the fourth request message to the HSS. The BSF may determine, based on the received first identifier, third identifier, fifth identifier, or third indication information of the terminal device, to generate the fourth request message or determine to send the fourth request message to the HSS.

Optionally, the BSF may further determine, based on the first identifier, the third identifier, the fifth identifier, or the third indication information, to generate a fifth identifier (TMPI*), or that the terminal device supports a 5g GBA, or that the terminal device is a 5G terminal device, or to perform the authentication and the key agreement of the 5G GBA.

In a possible implementation, if the BSF receives the first identifier, the BSF obtains the second identifier based on the received first identifier and the IPK, and includes the second identifier in the fourth request message. That the BSF obtains the second identifier based on the received first identifier and the IPK may be that the BSF obtains the second identifier by decrypting the first identifier by using the IPK. For example, assuming that the first identifier is an IMPI*, the BSF determines, based on the first identifier and the IPK, that the second identifier is an IMPI.

In a possible implementation, when the BSF receives the first identifier, the BSF includes the received first identifier in the fourth request message. In a possible implementation, when the BSF receives the third identifier, the BSF includes the received third identifier in the fourth request message. When the BSF receives the second identifier, the BSF includes the received second identifier in the fourth request message.

In a possible implementation, after the BSF receives the first identifier, if the BSF cannot decrypt the first identifier to obtain the second identifier, the BSF sends an error message to the terminal device, where the error message indicates the terminal device to resend the third bootstrapping request message carrying the first identifier, or indicates that the terminal device cannot decrypt the first identifier to obtain the second identifier. Correspondingly, after receiving the error message, the terminal device resends the third bootstrapping request message carrying the first identifier.

In a possible implementation, if the BSF receives the fifth identifier, the BSF determines the second identifier corresponding to the fifth identifier, and includes the second identifier in the fourth request message.

Step S705: The BSF sends the fourth request message to the HSS.

Specifically, the fourth request message includes the first identifier, the second identifier, or the third identifier, and the fourth request message is for obtaining a first authentication vector of the terminal device, or is for invoking a first authentication service of the HSS to obtain the first authentication vector of the terminal device.

Step S706: The HSS receives the fourth request message from the BSF.

Specifically, the fourth request message includes the first identifier, the second identifier, or the third identifier.

Step S707: The HSS obtains the first authentication vector of the terminal device based on the received first identifier, second identifier, or third identifier.

In a possible implementation, the fourth request message includes the second identifier or the third identifier, and the HSS generates the first authentication vector of the terminal device based on the second identifier or the third identifier. Then, the HSS directly performs step S711. For a possible implementation of the first authentication vector of the terminal device, refer to descriptions in step S507.

In another possible implementation, the fourth request message includes the first identifier, the HSS obtains the second identifier based on the first identifier and the IPK, and the HSS generates the first authentication vector of the terminal device based on the second identifier. Then, the HSS directly performs step S711. That the HSS obtains the second identifier based on the first identifier and the IPK may be, for example, the HSS obtains the second identifier by decrypting the first identifier by using the IPK.

In a possible implementation, the HSS sends a fifth request message to the unified data management (unified data management, UDM) based on the received first identifier, second identifier, or third identifier. Specifically, the fifth request message includes the first identifier, the second identifier, or the third identifier, and the fifth request message is for requesting the UDM to generate the first authentication vector of the terminal device, or is for invoking a first authentication service of the UDM to obtain the first authentication vector of the terminal device.

In another possible implementation, the HSS obtains the second identifier based on the received first identifier and the IPK, and then the HSS sends the fifth request message to the UDM, where the fifth request message includes the obtained second identifier, so that the UDM generates the first authentication vector of the terminal device based on the second identifier.

Step S708: The UDM receives the fifth request message, and generates the first authentication vector based on the first identifier, the second identifier, or the third identifier in the fifth request message.

Specifically, for a possible implementation of the first authentication vector, refer to step S507, and details are not described herein again. That the UDM generates the first authentication vector based on the first identifier, the second identifier, or the third identifier may be any one of the following possible implementations.

In a possible implementation, the UDM receives the first identifier, and the UDM obtains the second identifier based on the first identifier and the IPK. For example, the UDM obtains the second identifier by decrypting the first identifier by using the IPK, and then generates the first authentication vector based on the second identifier. Possibly, the UDM obtains the second identifier based on the first identifier and the IPK, where the second identifier is the SUPI, and then the UDM generates the first authentication vector based on the SUPI. For example, assuming that the first identifier is the SUCI, the UDM invokes a subscription identifier de-concealing function (single network slice selection assistance information, SIDF) to de-conceal the SUCI, to obtain the SUPI, and the UDM generates the first authentication vector of the terminal device based on the SUPI. Assuming that the first identifier is the IMPI*, the UDM obtains the IMPI based on the IMPI* and the IPK. Further, the UDM further obtains the SUPI based on the IMPI, and generates the first authentication vector of the terminal device based on the SUPI. If the first identifier is the IMSI*, the UDM obtains the IMSI based on the IMSI^{∗} and the IPK. Further, the UDM further generates the SUPI based on the IMSI, and generates the first authentication vector of the terminal device based on the SUPI. If the first identifier is the GPSI*, the UDM obtains the GPSI based on the GPSI* and the IPK, obtains the SUPI based on the GPSI, and generates the first authentication vector of the terminal device based on the SUPI.

In a possible implementation, the UDM receives the second identifier, and the UDM generates the first authentication vector based on the second identifier. Possibly, assuming that the second identifier is the IMSI, the UDM generates the SUPI based on the IMSI, and generates the first authentication vector of the terminal device based on the SUPI.

Assuming that the second identifier is the IMPI, the UDM generates the SUPI based on the IMPI, and generates the first authentication vector of the terminal device based on the SUPI.

In a possible implementation, the UDM receives the third identifier, and the UDM generates the first authentication vector based on the third identifier. Possibly, assuming that the third identifier is the GPSI, the UDM obtains a corresponding SUPI based on the GPSI, and the UDM generates the first authentication vector of the terminal device based on the SUPI.

Step S709: The UDM sends a fifth response message to the HSS.

Specifically, the fifth response message includes the first authentication vector, or the first authentication vector and the second identifier.

Step S710: The HSS receives the fifth response message from the UDM.

Specifically, the second response information includes the first authentication vector, or the first authentication vector and the second identifier.

Step S711: The HSS sends a fourth response message to the BSF.

Specifically, the fourth response message includes the first authentication vector, or the first authentication vector and the second identifier. Optionally, the fourth response message includes the third indication information, and the third indication information indicates the BSF to generate the fifth identifier (TMPI*) of the terminal device, indicating the terminal device to support the 5g GBA, indicating that the terminal device is a 5G terminal device, indicating to perform the authentication and the key agreement of the 5G GBA, or indicating that the algorithm supported by the terminal device includes the second algorithm.

Step S712: The BSF receives the fourth response message from the HSS.

Specifically, the fourth response message includes the first authentication vector, or the first authentication vector and the second identifier. Optionally, the fourth response message includes the third indication information, and the third indication information indicates the BSF to generate the fifth identifier (TMPI*) of the terminal device, or indicating the terminal device to support the 5g GBA, or indicating that the terminal device is a 5G terminal device, or indicating to perform the authentication and the key agreement of the 5G GBA, or indicating that the algorithm supported by the terminal device includes the second algorithm.

Step S713: The BSF selects a target algorithm based on an identifier of the terminal device or the third indication information.

Specifically, the third bootstrapping request message includes any one of the following: the first identifier, the first identifier and the third indication information, the third identifier, the third identifier and the third indication information, or the second identifier. The fourth bootstrapping request message includes the fifth identifier, or the fifth identifier and the third indication information.

The identifier of the terminal device includes any one of the following: the first identifier, the second identifier, the third identifier, or the fifth identifier.

In a possible implementation, the BSF determines, based on the first identifier, the third identifier, the fifth identifier, or the third indication information, that the algorithm supported by the terminal device includes the second algorithm. In an example, assuming that the first identifier is the SUCI or the GPSI* and the second algorithm is SHA-256, the BSF determines that the algorithm supported by the terminal device is SHA-256. In an example, assuming that the third identifier is the IMPI* and the second algorithm is SHA-256, the BSF determines that the algorithm supported by the terminal device is SHA-256. In an example, assuming that the fifth identifier is the TMPI^{∗} and the second algorithm is SHA-256, the BSF determines that the algorithm supported by the terminal device includes SHA-256. In a possible implementation, the BSF determines, based on the second identifier, that the algorithm supported by the terminal device is the first algorithm. For example, assuming that the second identifier is the IMPI or the SUPI and the first algorithm is SHA-1, the BSF determines, based on the IMPI or the SUPI, that the algorithm supported by the terminal device is SHA-1.

In a possible implementation, when the algorithm supported by the terminal device includes the second algorithm, the BSF selects the second algorithm as the target algorithm. For example, the first algorithm is SHA-1, the second algorithm is SHA-256, the algorithm supported by the terminal device includes SHA-1 and SHA-256, and the BSF selects SHA-256 as the target algorithm. In another example, the second algorithm is SHA-256, the algorithm supported by the terminal device is SHA-256, and the BSF selects SHA-256 as the target algorithm. In a possible implementation, when the algorithm supported by the terminal device is the first algorithm, the BSF selects the first algorithm as the target algorithm. For example, when the first algorithm is SHA-1 and the algorithm supported by the terminal is SHA-1, the BSF selects SHA-1 as the target algorithm.

Optionally, before the B SF selects a target algorithm based on an identifier of the terminal device or the third indication information, the BSF determines the BSF supports the algorithm supported by the terminal device.

Specifically, the algorithm supported by the terminal device includes the first algorithm and/or the second algorithm. In an example, the first algorithm is SHA-1, and the second algorithm is SHA-256.

In a possible implementation, the B SF supports the algorithm supported by the terminal device. For example, assuming that the algorithm supported by the terminal device is SHA-1 and an algorithm supported by the BSF includes SHA-1, the BSF supports the algorithm supported by the terminal device. In another example, assuming that the algorithm supported by the terminal device is SHA-256 and the algorithm supported by the BSF includes SHA-256, the BSF supports the algorithm supported by the terminal device. In another example, assuming that the algorithm supported by the terminal device is SHA-1 and SHA-256 and the algorithm supported by the BSF include SHA-1 and SHA-256, the BSF supports the algorithm supported by the terminal device.

In a possible implementation, the BSF does not support the algorithm supported by the terminal device. For example, assuming that the algorithm supported by the terminal device is SHA-256, and an algorithm supported by the BSF does not include SHA-256, the BSF does not support the algorithm supported by the terminal device. In another example, assuming that the algorithm supported by the terminal device is SHA-1 and SHA-256 and the algorithm supported by the BSF does not include SHA-256 and SHA-1, the BSF does not support the algorithm supported by the terminal device.

In a possible implementation, after the BSF does not support the algorithm supported by the terminal device, the BSF sends the third indication information to the terminal device, where the third indication information indicates the terminal device to use a mobile equipment-based generic bootstrapping architecture GBA_ME mechanism. After receiving the third indication information, the terminal device uses the GBA_ME mechanism, to be specific, verifies a second message authentication code MAC or AUTN. In other words, when the terminal device uses the GBA_ME mechanism, correspondingly, the terminal device receives the second message authentication code MAC from the BSF.

The BSF may alternatively select the target algorithm at any time point after the BSF receives the first bootstrapping request message. This is not limited in this application.

In a possible implementation, before the B SF selects the target algorithm based on the identifier of the terminal device, the BSF determines to use a generic bootstrapping architecture with universal integrated circuit card-based enhancements GBA_U mechanism.

In a possible implementation, after the BSF selects the target algorithm, the BSF sends the target algorithm to the terminal device. In an example, assuming that after the BSF selects SHA-256 as the target algorithm based on the identifier of the terminal device in the third bootstrapping request message or the fourth bootstrapping request message, the BSF sends the target algorithm SHA-256 to the terminal device.

Step S714: The BSF determines a first message authentication code MAC* based on the target algorithm.

In an example, assuming that the target algorithm is SHA-256, the BSF obtains the first message authentication code MAC* based on the second message authentication code MAC in the received first authentication vector, MAC*= MAC⊕Trunc (SHA-256(IK)), where Trunc indicates a truncation operation.

In a possible implementation, after the BSF determines a first message authentication code MAC* based on the target algorithm, the BSF determines AUTN* based on the first message authentication code MAC*, where AUTN* = SQN⊕AK ∥ AMF ∥ MAC*, AMF is an authentication management field, SQN is a sequence number, both the terminal device and the HSS store SQN, and AK is an anonymous key.

Optionally, before the BSF determines the first message authentication code MAC* and AUTN* based on the target algorithm, the BSF determines to use the GBA_U mechanism.

Step S715: The BSF sends the random number RAND and AUTN* to the terminal device.

Specifically, AUTN* includes the first message authentication code MAC*.

Optionally, the BSF further sends the target algorithm to the terminal device.

Step S716: The terminal device receives the random number RAND and AUTN* from the BSF.

Optionally, the terminal device receives the target algorithm from the BSF.

Step S717: The terminal device determines the second message authentication code.

Specifically, the second message authentication code may be MAC, and the second message authentication code is for authenticating the BSF.

If the terminal device receives the target algorithm from the BSF, the terminal device determines the second message authentication code based on the target algorithm and the first message authentication code; or if the terminal device does not receive the target algorithm and the terminal device supports the first algorithm and the second algorithm, the terminal device determines the second message authentication code based on the first algorithm and the first message authentication code.

In an example, assuming that the target algorithm is SHA-256 and the first message authentication code is MAC*, where MAC* = MAC⊕Trunc (SHA-256(IK)), and the terminal device determines MAC by using SHA-256 and MAC*.

Specifically, after the terminal device receives the random number RAND and AUTN*, the terminal device or the UICC computes IK by using a same method as that used by a network side device, and computes MAC=MAC^{∗}⊕Trunc (SHA-256(IK)). Further, the terminal device or the UICC may further compute AUTN = SQN ⊕AK ∥ AMF ∥ MAC, and verify that the AUTN is from an authorized network.

Optionally, before the terminal device computes the second message authentication code, the terminal device determines to use the GBA_U mechanism.

Step S718: If the terminal device does not receive the target algorithm from the BSF, the terminal device verifies AUTN* and MAC* by using the first algorithm SHA-1.

Step S719: The terminal device sends authentication response information generated based on a RES to the BSF. Step S720: The BSF verifies the authentication response information, and sends a result of verifying the authentication response information to the terminal device.

In a possible implementation, before the BSF sends the result of verifying the authentication response information to the terminal device, the BSF generates the fifth identifier; or the BSF generates the fifth identifier (TMPI*) based on the third indication information in the fourth response message or the third indication information in the third bootstrapping request message. For descriptions of content included in the fifth identifier, refer to descriptions in step S501. Details are not described herein again. The BSF stores a correspondence between the fifth identifier and the second identifier. The correspondence is used by the BSF to determine a second identifier corresponding to the fifth identifier when the BSF receives the fourth bootstrapping request message including the fifth identifier.

In a possible implementation, after the BSF generates the fifth identifier, the BSF sends the fifth identifier to the terminal device.

In another possible implementation, before the BSF sends the result of verifying the authentication response information to the terminal device, the BSF generates first bootstrapping transaction identifier information (a B-TID^{∗}). Specifically, the first bootstrapping transaction identifier information (B-TID*) identifies a bootstrapping transaction performed by the terminal device and the BSF. Parameters for generating the B-TID^{∗} include one or more of the following: a random number RAND, a 5G GBA key, the second identifier, an identifier of the BSF, and a character for identifying 5G. The 5G GBA key is generated based on CK and IK, and the character for identifying 5G may include "5", and/or "5g", and/or "5g-gba", and/or "5g-gba-me", and/or "5g-gba-u", and/or "gba", and/or "5gba", and/or "5gba-me", and/or "5gba-u", and/or "5gba."

In another possible implementation, after the BSF generates the first bootstrapping transaction identifier information (B-TID*) based on the character for identifying 5G, the BSF sends the first bootstrapping transaction identifier information (B-TID*) to the terminal device.

Step S721: The terminal device obtains the first bootstrapping transaction identifier information (B-TID^{∗}) and/or the fifth identifier (TMPI*).

Specifically, the first bootstrapping transaction identifier information (B-TID*) and the fifth identifier (TMPI*) are described above, and details are not described herein again.

In a possible implementation, the terminal device receives the first bootstrapping transaction identifier information (B-TID*) and/or the fifth identifier (TMPI*) from the BSF.

In another possible implementation, the terminal device generates the first bootstrapping transaction identifier information (B-TID*) and/or the fifth identifier (TMPI*) of the terminal device. Parameters for generating the first bootstrapping transaction identifier information (B-TID*) and the fifth identifier (TMPI*) are described above, and details are not described herein again.

Step S722: Optionally, the terminal device sends an application request message to a network application function NAF.

Specifically, the application request message includes the first bootstrapping transaction identifier information (B - TID*).

Step S723: The NAF receives the application request message from the terminal device.

Specifically, after the NAF receives the application request message from the terminal device, the NAF may determine, based on the BSF domain name* carried in the first bootstrapping transaction identifier information (B-TID*), a BSF performing a bootstrapping request procedure with the terminal device, and obtain, from the B SF, a key for performing secure communication with the terminal device.

In the method shown in FIG. 7A to FIG. 7C, the BSF determines the target algorithm based on the identifier of the terminal device included in the bootstrapping request message from the terminal device, and sends the target algorithm to the terminal device. In this manner, it can be ensured that the terminal device and the BSF verify AUTN* by using a same algorithm, thereby resolving algorithm incompatibility between the terminal device and the BSF.

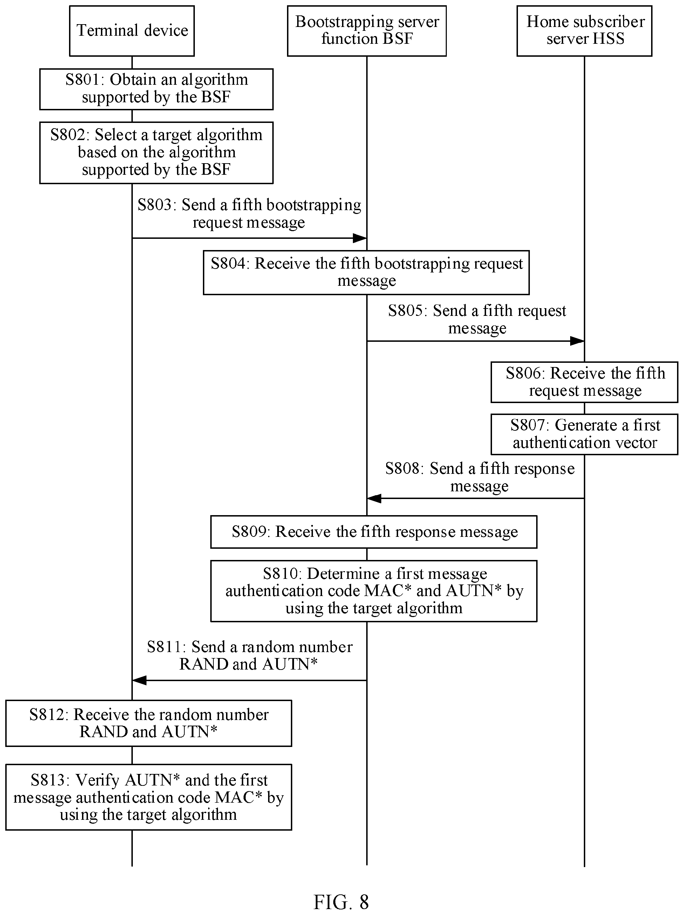

FIG. 8 shows an algorithm negotiation method in a generic bootstrapping architecture according to an embodiment of this application. The method includes but is not limited to the following steps.

Step S801: A terminal device obtains an algorithm supported by a BSF.

Specifically, the algorithm supported by the BSF includes a first algorithm and/or a second algorithm. In an example, the first algorithm may be a secure hash algorithm 1 (SHA-1), and the second algorithm may be a secure hash algorithm 2 (SHA2). SHA2 includes a secure hash algorithm 224 (SHA-224), a secure hash algorithm 256 (SHA-256), a secure hash algorithm 384 (SHA-384), and a secure hash algorithm 512 (SHA-512). The first algorithm may include one or more algorithms, and the second algorithm may include one or more algorithms. This is not limited in this embodiment of this application. For example, the first algorithm may be the secure hash algorithm 1 (SHA-1), and the second algorithm may be the secure hash algorithm 256 (SHA-256).

Step S802: The terminal device selects a target algorithm based on the algorithm supported by the BSF.

In an example, if the algorithm supported by the BSF includes SHA-256, the terminal device selects SHA-256 as the target algorithm. If the algorithm supported by the BSF is SHA-1, the terminal device selects SHA-1 as the target algorithm.

Step S803: The terminal device sends a fifth bootstrapping request message to the BSF.

Specifically, the fifth bootstrapping request message includes the target algorithm.

Step S804: The BSF receives the fifth bootstrapping request message from the terminal device.

Step S805: The BSF sends a fifth request message to an HSS.

Specifically, the fifth request message is for obtaining a first authentication vector of the terminal device, or is for invoking a first authentication service of the HSS to obtain the first authentication vector of the terminal device. Step S806: The HSS receives the fifth request message from the BSF.

Specifically, the fifth request message is for obtaining a first authentication vector of the terminal device, or is for invoking a first authentication service of the HSS to obtain the first authentication vector of the terminal device. Step S807: The HSS generates the first authentication vector of the terminal device.

Specifically, the first authentication vector of the terminal device may be generated by the HSS, or the HSS sends a request message to UDM to enable the UDM to generate the first authentication vector. For a possible implementation of the first authentication vector, refer to step S507. Details are not described herein again.

Step S808: The HSS sends a fifth response message to the BSF.

Specifically, the fifth response message includes the first authentication vector of the terminal device. For a possible implementation of the first authentication vector, refer to step S507. Details are not described herein again.

Step S809: The BSF receives the fifth response message from the HSS.

Specifically, the fifth response message includes the first authentication vector of the terminal device. For a possible implementation of the first authentication vector, refer to step S507. Details are not described herein again.

Step S810: The BSF determines a first message authentication code MAC* by using the target algorithm.

In an example, assuming that the target algorithm is SHA-256, the BSF obtains the first message authentication code MAC* based on the second message authentication code MAC in the received first authentication vector, MAC*= MAC⊕Trunc (SHA-256(IK)), where Trunc indicates a truncation operation.

In a possible implementation, after the BSF determines a first message authentication code MAC* based on the target algorithm, the BSF determines AUTN* based on the first message authentication code MAC*, where AUTN* = SQN⊕AK ∥ AMF ∥ MAC*, AMF is an authentication management field, SQN is a sequence number, both the terminal device and the HSS store SQN, and AK is an anonymous key.

Optionally, before the BSF determines a first message authentication code MAC* by using the target algorithm, the BSF determines to use a generic bootstrapping architecture with universal integrated circuit card-based enhancements GBA_U mechanism.

Step S811: The BSF sends a random number RAND and AUTN* to the terminal device.

Specifically, AUTN* includes the first message authentication code MAC*.

Step S812: The terminal device receives the random number RAND and AUTN* from the BSF.

Specifically, the first message authentication code is MAC*.

Step S813: The terminal device verifies AUTN* and MAC* by using the target algorithm.

In an example, assuming that the target algorithm is SHA-256 and the first message authentication code is MAC*, where MAC* = MAC⊕Trunc (SHA-256(IK)), and the terminal device determines MAC by using SHA-256 and MAC*.

In an example, assuming that the target algorithm is SHA-256, after the terminal device receives the random number RAND and AUTN*, the terminal device or the UICC computes IK by using a same method as that used by a network side, and computes MAC = MAC* ⊕Trunc (SHA-256(IK)). Further, the terminal device or the UICC may further compute AUTN = SQN ⊕AK ∥ AMF ∥ MAC, and verify that the AUTN is from an authorized network.

Optionally, before verifying AUTN* and MAC* by using the target algorithm, the terminal device determines to use the GBA_U mechanism.

In the method shown in FIG. 8, the terminal device obtains the algorithm supported by the BSF, then selects the target algorithm, and sends the target algorithm to the BSF. This avoids that the terminal device and the BSF use different algorithms. Therefore, it is ensured that the terminal device and the BSF use a same algorithm to perform the GBA_U mechanism, and algorithm incompatibility between old and new versions of the terminal device and the BSF is resolved.

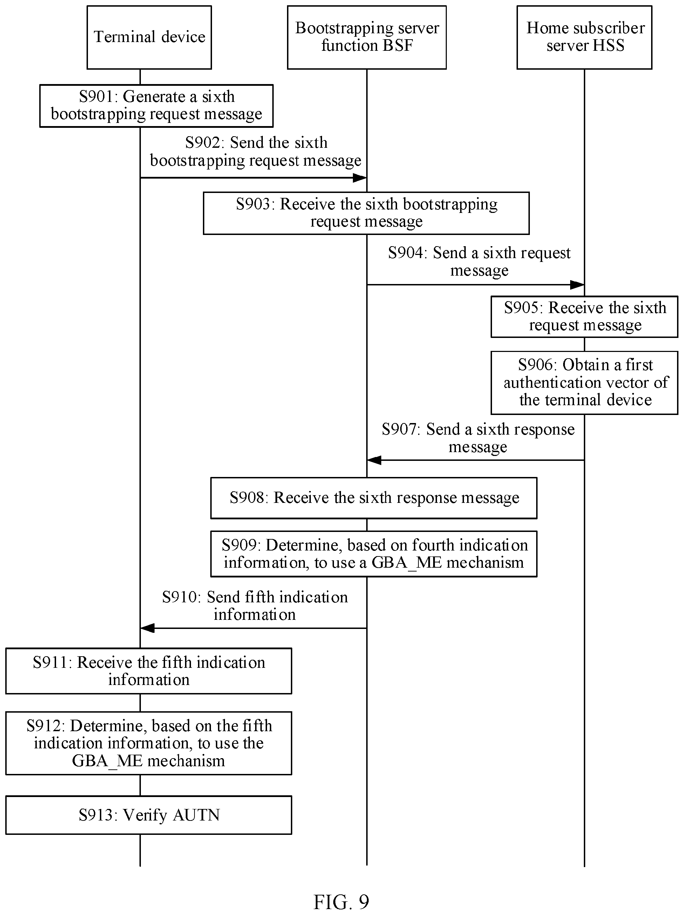

FIG. 9 shows an algorithm negotiation method in a generic bootstrapping architecture according to an embodiment of this application. The method includes but is not limited to the following steps.

Step S901: A terminal device generates a sixth bootstrapping request message.

Step S902: The terminal device sends the sixth bootstrapping request message to a BSF.

Step S903: The BSF receives the sixth bootstrapping request message from the terminal device.

Step S904: The BSF sends a sixth request message to an HSS.

Specifically, the sixth request message is for obtaining a first authentication vector of the terminal device, or is for invoking a first authentication service of the HSS to obtain the first authentication vector of the terminal device. Step S905: The HSS receives the sixth request message of the BSF.

Specifically, the sixth request message is for obtaining a first authentication vector of the terminal device, or is for invoking a first authentication service of the HSS to obtain the first authentication vector of the terminal device. Step S906: The HSS obtains the first authentication vector of the terminal device.

Specifically, the first authentication vector of the terminal device may be generated by the HSS, or the HSS sends a request message to UDM to enable the UDM to generate the first authentication vector. For a possible implementation of the first authentication vector, refer to step S507. Details are not described herein again.

Step S907: The HSS sends a sixth response message to the BSF.

Specifically, the sixth response message includes the first authentication vector of the terminal device. For a specific possible implementation of the first authentication vector, refer to step S507. Details are not described herein again. The sixth response message includes fourth indication information, and the third indication information indicates the BSF to use a GBA_ME mechanism. In other words, the fourth indication information indicates the BSF not to use a GBA_U mechanism.

Step 908: The BSF receives the sixth response message from the BSF.

Specifically, the sixth response message includes the first authentication vector of the terminal device, and the sixth response message includes the fourth indication information. The fourth indication information indicates the BSF to use the GBA_ME mechanism. In other words, the fourth indication information indicates the BSF not to use the GBA_U mechanism.

Step S909: The BSF determines, based on the fourth indication information, to use the GBA_ME mechanism. Specifically, if the BSF uses the GBA_ME mechanism, the BSF sends a random number RAND and an authentication token AUTN to the terminal device.

Step S910: The BSF sends fifth indication information to the terminal device.

Specifically, this step is an optional step, and the fifth indication information indicates the terminal device to use the GBA_ME mechanism.

Step S911: The terminal device receives the fifth indication information from the BSF.

Specifically, this step is an optional step, and the fifth indication information indicates the terminal device to use the GBA_ME mechanism.

Step S912: The terminal device determines, based on the fifth indication information, to use the GBA_ME mechanism. Step S913: The terminal device verifies the authentication token AUTN.

Specifically, the authentication token AUTN = SQN⊕AK ∥ AMF ∥ MAC, where the AMF is an authentication management field, SQN is a sequence number, both the terminal device and the HSS store SQN, AK is an anonymous key, MAC is a message authentication code, and⊕ indicates an exclusive OR operation, where MAC is generated based on SQN, K, AMF, and the random number RAND.

In the method shown in FIG. 9, the BSF obtains indication information from the terminal device or the HSS, where the indication information indicates the BSF not to use the GBA_U mechanism, thereby ensuring that both the BSF and the terminal device use the GBA_ME mechanism. Both the BSF and the terminal device use a first algorithm, thereby avoiding using inconsistent algorithms, and resolving algorithm incompatibility between the terminal device and the BSF.

The methods in embodiments of this application are described above in detail, and apparatuses in embodiments of this application are provided below.

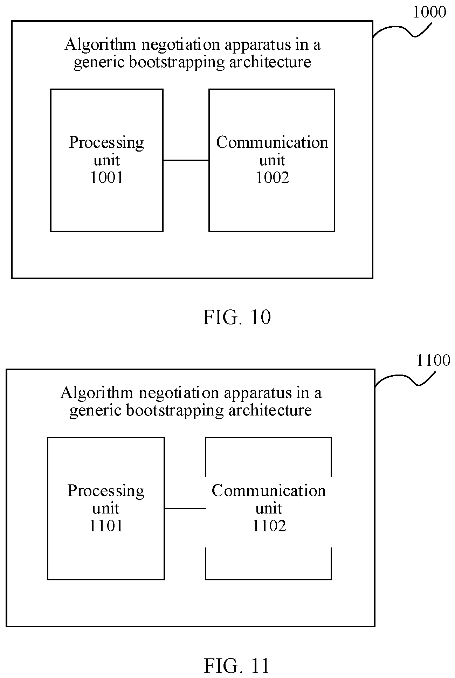

FIG. 10 is a schematic diagram of a structure of an algorithm negotiation apparatus in a generic bootstrapping architecture according to an embodiment of this application. The algorithm negotiation apparatus in the generic bootstrapping architecture may include a processing unit 1001 and a communication unit 1002. Detailed descriptions of the units are as follows.

The processing unit 1001 is configured to obtain an algorithm supported by a terminal device, where the algorithm supported by the terminal device includes a first algorithm and/or a second algorithm.

The processing unit 1001 is further configured to select a target algorithm based on the algorithm supported by the terminal device.

The processing unit 1001 is further configured to determine a first message authentication code based on the target algorithm.

The communication unit 1002 is configured to send the first message authentication code to the terminal device.

In a possible implementation, the communication unit 1002 is further configured to send the target algorithm to the terminal device.

In another possible implementation, the first algorithm includes a secure hash algorithm 1, and the second algorithm includes a secure hash algorithm 256.

In another possible implementation, the communication unit 1002 is further configured to receive the algorithm supported by the terminal device, first indication information, a first identifier, or a second identifier from the terminal device. The processing unit 1001 is further configured to determine, based on the first indication information, that the algorithm supported by the terminal device includes the second algorithm; the processing unit 1001 is further configured to determine, based on the first identifier, that the algorithm supported by the terminal device includes the second algorithm, where the first identifier is generated based on the second identifier; or the processing unit 1001 is further configured to determine, based on the second identifier, that the terminal device supports the first algorithm. In another possible implementation, the first identifier is generated based on the second identifier and an identity public key IPK.

In another possible implementation, the communication unit 1002 is further configured to receive a first bootstrapping request message from the terminal device, where the first bootstrapping request message includes the algorithm supported by the terminal device, the first indication information, the first identifier, or the second identifier.

In another possible implementation, the second identifier is one of the following information of the terminal device: a subscription permanent identifier SUPI, an internet protocol multimedia private identifier IMPI, an international mobile subscriber identity IMSI, or a generic public subscription identifier GPSI.

In another possible implementation, the communication unit 1002 is further configured to receive second indication information or the second algorithm supported by the terminal device from the home subscriber server network element, where the second indication information indicates that the algorithm supported by the terminal device includes the second algorithm. The processing unit 1001 is further configured to determine, based on the second indication information, that the algorithm supported by the terminal device includes the second algorithm.

In another possible implementation, the communication unit 1002 is further configured to send a first request message to the home subscriber server network element; and the communication unit 1002 is further configured to receive a first response message from the home subscriber server network element, where the first response message includes the second indication information or the algorithm supported by the terminal device.

In another possible implementation, the processing unit 1001 is further configured to: before selecting the target algorithm based on the algorithm supported by the terminal device, determine to use a generic bootstrapping architecture with universal integrated circuit card-based enhancements GBA_U mechanism.

In another possible implementation, the processing unit 1001 is further configured to: when the algorithm supported by the terminal device includes the second algorithm, select the second algorithm as the target algorithm.

In another possible implementation, the processing unit 1001 is further configured to: after obtaining the algorithm supported by the terminal device and before selecting the target algorithm based on the algorithm supported by the terminal device, determine whether the processing unit 1001 supports the algorithm supported by the terminal device. If the processing unit 1001 supports the algorithm supported by the terminal device, the processing unit 1001 selects the target algorithm; or if the processing unit 1001 does not support the algorithm supported by the terminal device, the processing unit 1001 sends third indication information to the terminal device, where the third indication information indicates the terminal device to use a mobile equipment-based generic bootstrapping architecture GBA_ME mechanism.

It should be noted that for implementation and beneficial effects of each unit, correspondingly refer to the corresponding descriptions in the method embodiment shown in FIG. 5.

FIG. 11 is a schematic diagram of a structure of an algorithm negotiation apparatus in a generic bootstrapping architecture according to an embodiment of this application. The algorithm negotiation apparatus in the generic bootstrapping architecture may include a processing unit 1101 and a communication unit 1102. Detailed descriptions of the units are as follows.

The processing unit 1101 is configured to generate a first bootstrapping request message.

The communication unit 1102 is configured to send the first bootstrapping request message to a bootstrapping server function network element, where the first bootstrapping request message includes an algorithm supported by the terminal device, a first identifier, a second identifier, or first indication information, the algorithm supported by the terminal device includes a first algorithm and/or a second algorithm, the first identifier indicates that the algorithm supported by the terminal device includes the second algorithm, the second identifier indicates that the terminal device supports the first algorithm, the first identifier is generated based on the second identifier, and the first indication information indicates that the algorithm supported by the terminal device includes the second algorithm.

The communication unit 1102 is further configured to receive a first message authentication code or a second message authentication code from the bootstrapping server function network element.

In a possible implementation, the first algorithm includes a secure hash algorithm 1, and the second algorithm includes a secure hash algorithm 256.

In another possible implementation, the first identifier is generated based on the second identifier and an identity public key IPK.

In another possible implementation, the second identifier is one of the following information of the terminal device: a subscription permanent identifier SUPI, an internet protocol multimedia private identifier IMPI, an international mobile subscriber identity IMSI, or a generic public subscription identifier GPSI.

In another possible implementation, the communication unit 1102 is configured to receive a target algorithm from the bootstrapping server function network element, where the target algorithm is determined based on the algorithms supported by the terminal device. The processing unit 1101 is configured to determine the second message authentication code based on the target algorithm and the first message authentication code, where the second message authentication code is for authenticating the bootstrapping server function network element.

In another possible implementation, the processing unit 1101 is further configured to: before generating the first bootstrapping request message, read an algorithm supported by a universal integrated circuit card UICC of the terminal device, where the algorithm supported by the terminal device is the algorithm supported by the universal integrated circuit card UICC.

In another possible implementation, the communication unit 1102 is further configured to receive third indication information from the bootstrapping server function network element, where the third indication information indicates the terminal device to use a mobile equipment-based generic bootstrapping architecture GBA_ME mechanism. The processing unit 1101 is further configured to verify the second message authentication code.

It should be noted that for implementation and beneficial effects of each unit, correspondingly refer to the corresponding descriptions in the method embodiment shown in FIG. 5.

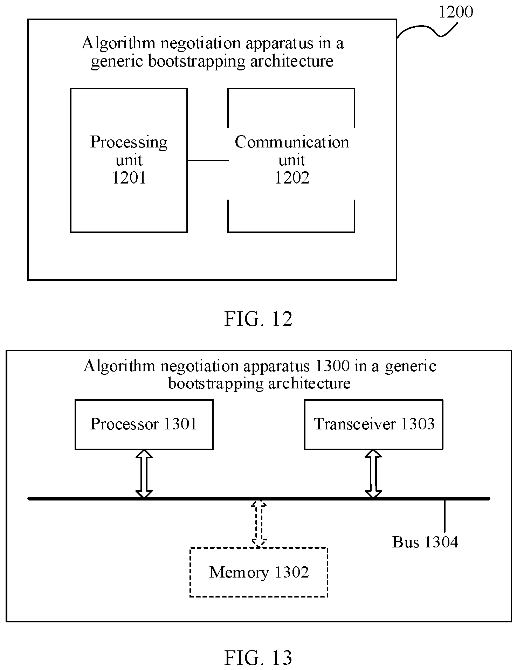

FIG. 12 is a schematic diagram of a structure of an algorithm negotiation apparatus in a generic bootstrapping architecture according to an embodiment of this application. The algorithm negotiation apparatus in the generic bootstrapping architecture may include a processing unit 1201 and a communication unit 1202. Detailed descriptions of the units are as follows.

The processing unit 1201 is configured to receive a first request message from a bootstrapping server function network element by using the communication unit.

The communication unit 1202 is further configured to send a first response message to the bootstrapping server function network element, where the first response message includes an algorithm supported by the terminal device or second indication information, the algorithm supported by the terminal device includes a first algorithm and/or a second algorithm, and the second indication information indicates that the algorithm supported by the terminal device includes the second algorithm.

In a possible implementation, the first algorithm includes a secure hash algorithm 1, and the second algorithm includes a secure hash algorithm 256.

It should be noted that for implementation and beneficial effects of each unit, correspondingly refer to the corresponding descriptions in the method embodiment shown in FIG. 5.

FIG. 13 shows an algorithm negotiation apparatus 1300 in a generic bootstrapping architecture according to an embodiment of this application. The apparatus 1300 includes a processor 1301 and a transceiver 1303, and optionally includes a memory 1302. The processor 1301, the memory 1302, and the transceiver 1303 are connected to each other through a bus 1304.

The memory 1302 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory 1302 is configured for related instructions and data. The transceiver 1303 is configured to send and receive data.

The processor 1301 may be one or more central processing units (central processing unit, CPU). When the processor 1301 is one CPU, the CPU may be a single-core CPU, or may be a multi-core CPU.

The processor 1301 in the apparatus 1300 reads a computer program stored in the memory 1302, and is configured to perform the following operations:
obtaining an algorithm supported by a terminal device, where the algorithm supported by the terminal device includes a first algorithm and/or a second algorithm;
selecting a target algorithm based on the algorithm supported by the terminal device;
determining first message authentication code based on the target algorithm; and
sending the first message authentication code to the terminal device by using the transceiver 1303.

In a possible implementation, the processor 1301 is further configured to send the target algorithm to the terminal device by using the transceiver 1303.

In another possible implementation, the first algorithm includes a secure hash algorithm 1, and the second algorithm includes a secure hash algorithm 256.

In another possible implementation, the processor 1301 is further configured to receive, by using the transceiver 1303, the algorithm supported by the terminal device, first indication information, a first identifier, or a second identifier from the terminal device; determine, based on the first indication information, that the algorithm supported by the terminal device includes the second algorithm; determine, based on the first identifier, that the algorithm supported by the terminal device includes the second algorithm, where the first identifier is generated based on the second identifier; or determine, based on the second identifier, that the terminal device supports the first algorithm.

In another possible implementation, the first identifier is generated based on the second identifier and an identity public key IPK.

In another possible implementation, the processor 1301 is further configured to receive a first bootstrapping request message from the terminal device by using the transceiver 1303, where the first bootstrapping request message includes the algorithm supported by the terminal device, the first indication information, the first identifier, or the second identifier.

In another possible implementation, the second identifier is one of the following information of the terminal device: a subscription permanent identifier SUPI, an internet protocol multimedia private identifier IMPI, an international mobile subscriber identity IMSI, or a generic public subscription identifier GPSI.

In another possible implementation, the processor 1301 is further configured to receive, by using the transceiver 1303, second indication information or the second algorithm supported by the terminal device from the home subscriber server network element, where the second indication information indicates that the algorithm supported by the terminal device includes the second algorithm; and determine, based on the second indication information, that the algorithm supported by the terminal device includes the second algorithm.

In another possible implementation, the processor 1301 is further configured to send a first request message to the home subscriber server network element by using the transceiver 1303; and receive a first response message from the home subscriber server network element by using the transceiver 1303, where the first response message includes the second indication information or the algorithm supported by the terminal device.

In another possible implementation, the processor 1301 is further configured to: before selecting the target algorithm based on the algorithm supported by the terminal device, determine to use a generic bootstrapping architecture with universal integrated circuit card-based enhancements GBA_U mechanism.

In another possible implementation, the processor 1301 is further configured to: when the algorithm supported by the terminal device includes the second algorithm, select the second algorithm as the target algorithm.

In another possible implementation, the processor 1301 is further configured to: after obtaining the algorithm supported by the terminal device and before selecting the target algorithm based on the algorithm supported by the terminal device, determine whether the processor 1301 supports the algorithm supported by the terminal device. If the processor 1301 supports the algorithm supported by the terminal device, the processor 1301 selects the target algorithm; or if the processor 1301 does not support the algorithm supported by the terminal device, the processor 1301 sends third indication information to the terminal device by using the transceiver 1303, where the third indication information indicates the terminal device to use a mobile equipment-based generic bootstrapping architecture GBA_ME mechanism.

It should be noted that for implementation and beneficial effects of each operation, correspondingly refer to the corresponding descriptions in the method embodiment shown in FIG. 5.

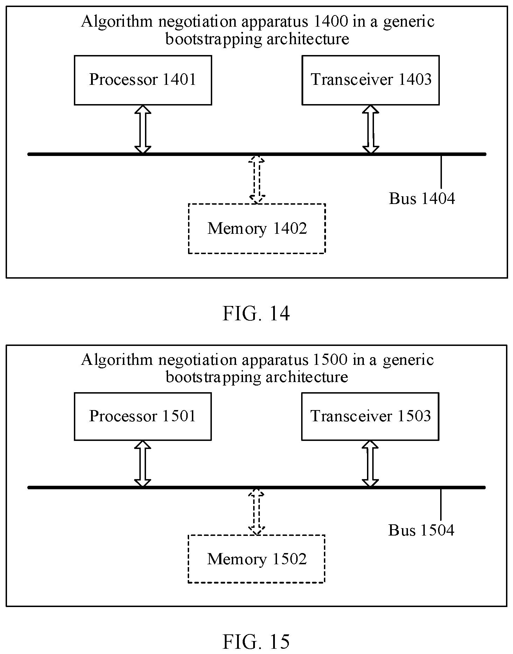

FIG. 14 shows an algorithm negotiation apparatus 1400 in a generic bootstrapping architecture according to an embodiment of this application. The apparatus 1400 includes a processor 1401 and a transceiver 1403, and optionally includes a memory 1402. The processor 1401, the memory 1402, and the transceiver 1403 are connected to each other through a bus 1404.

The memory 1402 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory 1402 is configured for related instructions and data. The transceiver 1403 is configured to send and receive data.

The processor 1401 may be one or more central processing units (central processing unit, CPU). When the processor 1401 is one CPU, the CPU may be a single-core CPU, or may be a multi-core CPU.

The processor 1401 in the apparatus 1400 reads a computer program stored in the memory 1402, and is configured to perform the following operations:
generating a first bootstrapping request message;
sending the first bootstrapping request message to a bootstrapping server function network element by using the transceiver 1403, where the first bootstrapping request message includes an algorithm supported by the terminal device, a first identifier, a second identifier, or first indication information, the algorithm supported by the terminal device includes a first algorithm and/or a second algorithm, the first identifier indicates that the algorithm supported by the terminal device includes the second algorithm, the second identifier indicates that the terminal device supports the first algorithm, the first identifier is generated based on the second identifier, and the first indication information indicates that the algorithm supported by the terminal device includes the second algorithm; and
receiving a first message authentication code or a second message authentication code from the bootstrapping server function network element by using the transceiver 1403.

In a possible implementation, the first algorithm includes a secure hash algorithm 1, and the second algorithm includes a secure hash algorithm 256.

In another possible implementation, the first identifier is generated based on the second identifier and an identity public key IPK.

In another possible implementation, the second identifier is one of the following information of the terminal device: a subscription permanent identifier SUPI, an internet protocol multimedia private identifier IMPI, an international mobile subscriber identity IMSI, or a generic public subscription identifier GPSI.

In another possible implementation, the processor 1401 is further configured to receive a target algorithm from the bootstrapping server function network element by using the transceiver 1403, where the target algorithm is determined based on the algorithms supported by the terminal device; and determine the second message authentication code based on the target algorithm and the first message authentication code, where the second message authentication code is for authenticating the bootstrapping server function network element.

In another possible implementation, the processor 1401 is further configured to: before generating the first bootstrapping request message, read an algorithm supported by a universal integrated circuit card UICC of the terminal device, where the algorithm supported by the terminal device is the algorithm supported by the universal integrated circuit card UICC.

In another possible implementation, the processing unit is further configured to receive third indication information from the bootstrapping server function network element by using the transceiver 1403, where the third indication information indicates the terminal device to use a mobile equipment-based generic bootstrapping architecture GBA_ME mechanism; and verify the second message authentication code.

It should be noted that for implementation and beneficial effects of each operation, correspondingly refer to the corresponding descriptions in the method embodiment shown in FIG. 5.

FIG. 15 shows an algorithm negotiation apparatus 1500 in a generic bootstrapping architecture according to an embodiment of this application. The apparatus 1500 includes a processor 1501 and a transceiver 1503, and optionally includes a memory 1502. The processor 1501, the memory 1502, and the transceiver 1503 are connected to each other through a bus 1504.

The memory 1502 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory 1502 is configured for related instructions and data. The transceiver 1503 is configured to send and receive data.

The processor 1501 may be one or more central processing units (central processing unit, CPU). When the processor 1501 is one CPU, the CPU may be a single-core CPU, or may be a multi-core CPU.

The processor 1501 in the apparatus 1500 reads a computer program stored in the memory 1502, and is configured to perform the following operations:
receiving a first request message from the bootstrapping server function network element by using the transceiver 1503; and
sending a first response message to the bootstrapping server function network element by using the transceiver 1503, where the first response message includes an algorithm supported by the terminal device or second indication information, the algorithm supported by the terminal device includes a first algorithm and/or a second algorithm, and the second indication information indicates that the algorithm supported by the terminal device includes the second algorithm.

In a possible implementation, the first algorithm is a secure hash algorithm 1, and the second algorithm is a secure hash algorithm 256.

It should be noted that for implementation and beneficial effects of each operation, correspondingly refer to the corresponding descriptions in the method embodiment shown in FIG. 5.

An embodiment of this application further provides a chip system. The chip system includes at least one processor, a memory, and an interface circuit. The memory, the transceiver, and the at least one processor are connected to each other through lines. The at least one memory stores instructions. When the instructions are executed by the processor, the method procedure shown in FIG. 5 is implemented.

An embodiment of this application further provides a computer-readable storage medium, where the computer-readable storage medium stores instructions. When the instructions are run on a bootstrapping server function network element, a home subscriber server network element, or a terminal device, the method procedure shown in FIG. 5 is implemented.

An embodiment of this application further provides a computer program product. When the computer program product runs on a bootstrapping server function network element, a home subscriber server network element, or a terminal device, the method procedure shown in FIG. 5 is implemented.

An embodiment of this application further provides an algorithm negotiation system in a generic bootstrapping architecture, including a first apparatus and a second apparatus. The first apparatus is the bootstrapping server function described in FIG. 5, and the second apparatus is the home subscriber server described in FIG. 5.

Person of ordinary skill in the art may understand that all or some of the procedures in the methods in the embodiments may be implemented by using a computer program instructing relevant hardware. The program may be stored in a computer-readable storage medium. When the program runs, the procedures in the foregoing method embodiments may be performed. The storage medium includes: any medium that can store program code, such as a ROM, a RAM, a magnetic disk, or an optical disc.

## Claims

1. An algorithm negotiation method in a generic bootstrapping architecture, comprising:
obtaining, by a bootstrapping server function network element, an algorithm supported by a terminal device, wherein the algorithm supported by the terminal device comprises a first algorithm and/or a second algorithm;
selecting, by the bootstrapping server function network element, a target algorithm based on the algorithms supported by the terminal device;
determining, by the bootstrapping server function network element, a first message authentication code based on the target algorithm; and
sending, by the bootstrapping server function network element, the first message authentication code to the terminal device.

2. The method according to claim 1, further comprising: sending, by the bootstrapping server function network element, the target algorithm to the terminal device.

3. The method according to claim 1 or 2, wherein the first algorithm comprises a secure hash algorithm 1, and the second algorithm comprises a secure hash algorithm 256.

4. The method according to any one of claims 1 to 3, wherein the obtaining, by a bootstrapping server function network element, an algorithms supported by a terminal device comprises:
receiving, by the bootstrapping server function network element, the algorithm supported by the terminal device, first indication information, a first identifier, or a second identifier from the terminal device; and
determining, by the bootstrapping server function network element based on the first indication information, that the algorithm supported by the terminal device comprises the second algorithm; or
determining, by the bootstrapping server function network element based on the first identifier, that the algorithm supported by the terminal device comprises the second algorithm, wherein the first identifier is generated based on the second identifier; or
determining, by the bootstrapping server function network element based on the second identifier, that the terminal device supports the first algorithm.

5. The method according to claim 4, wherein the first identifier is generated based on the second identifier and an identity public key IPK.

6. The method according to claim 4 or 5, wherein the receiving, by the bootstrapping server function network element, the algorithms supported by the terminal device, first indication information, a first identifier, or a second identifier from the terminal device comprises:
receiving, by the bootstrapping server function network element, a first bootstrapping request message from the terminal device, wherein the first bootstrapping request message comprises the algorithms supported by the terminal device, the first indication information, the first identifier, or the second identifier.

7. The method according to any one of claims 4 to 6, wherein the second identifier is one of the following information of the terminal device: a subscription permanent identifier SUPI, an internet protocol multimedia private identity IMPI, an international mobile subscriber identity IMSI, or a generic public subscription identifier GPSI.

8. The method according to any one of claims 1 to 3, wherein the obtaining, by a bootstrapping server function network element, an algorithm supported by a terminal device comprises:
receiving, by the bootstrapping server function network element, second indication information or the second algorithm supported by the terminal device from the home subscriber server network element, wherein the second indication information indicates that the algorithms supported by the terminal device comprise the second algorithm; and
determining, by the bootstrapping server function network element based on the second indication information, that the algorithms supported by the terminal device comprise the second algorithm.

9. The method according to claim 8, wherein the receiving, by the bootstrapping server function network element, second indication information or the algorithms supported by the terminal device from the home subscriber server network element comprises:
sending, by the bootstrapping server function network element, a first request message to the home subscriber server network element; and
receiving, by the bootstrapping server function network element, a first response message from the home subscriber server network element, wherein the first response message comprises the second indication information or the algorithms supported by the terminal device.

10. The method according to any one of claims 1 to 9, wherein before the selecting, by the bootstrapping server function network element, a target algorithm based on the algorithms supported by the terminal device, the method further comprises:
determining, by the bootstrapping server function network element, to use a generic bootstrapping architecture with universal integrated circuit card-based enhancements GBA_U mechanism.

11. The method according to any one of claims 1 to 10, wherein the selecting, by the bootstrapping server function network element, a target algorithm based on the algorithms supported by the terminal device comprises:
when the algorithms supported by the terminal device comprise the second algorithm, selecting, by the bootstrapping server function network element, the second algorithm as the target algorithm.

12. The method according to any one of claims 1 to 11, wherein after the obtaining, by a bootstrapping server function network element, algorithms supported by a terminal device, and before the selecting, by the bootstrapping server function network element, a target algorithm based on the algorithms supported by the terminal device, the method further comprises:
determining, by the bootstrapping server function network element, whether the bootstrapping server function network element supports the algorithms supported by the terminal device;
if the bootstrapping server function network element supports the algorithms supported by the terminal device, selecting, by the bootstrapping server function network element, the target algorithm; or
if the bootstrapping server function network element does not support the algorithms supported by the terminal device, sending, by the bootstrapping server function network element, third indication information to the terminal device, wherein the third indication information is for indicating the terminal device to use a mobile equipment-based generic bootstrapping architecture GBA_ME mechanism.

13. An algorithm negotiation method in a generic bootstrapping architecture, comprising:
generating, by a terminal device, a first bootstrapping request message;
sending, by the terminal device, the first bootstrapping request message to a bootstrapping server function network element, wherein the first bootstrapping request message comprises algorithms supported by the terminal device, a first identifier, a second identifier, or first indication information, the algorithms supported by the terminal device comprise a first algorithm and/or a second algorithm, the first identifier indicates that the algorithm supported by the terminal device comprises the second algorithm, the second identifier indicates that the terminal device supports the first algorithm, the first identifier is generated based on the second identifier, and the first indication information indicates that the algorithm supported by the terminal device comprises the second algorithm; and
receiving, by the terminal device, a first message authentication code or a second message authentication code from the bootstrapping server function network element.

14. The method according to claim 13, wherein the first algorithm comprises a secure hash algorithm 1, and the second algorithm comprises a secure hash algorithm 256.

15. The method according to claim 13 or 14, wherein the first identifier is generated based on the second identifier and an identity public key IPK.

16. The method according to any one of claims 13 to 15, wherein the second identifier is one of the following information of the terminal device: a subscription permanent identifier SUPI, an internet protocol multimedia private identity IMPI, an international mobile subscriber identity IMSI, or a generic public subscription identifier GPSI.

17. The method according to any one of claims 13 to 16, wherein the terminal device receives the first message authentication code (MAC*) from the bootstrapping server function network element, and the method further comprises:
receiving, by the terminal device, a target algorithm from the bootstrapping server function network element, wherein the target algorithm is determined based on the algorithm supported by the terminal device; and
determining, by the terminal device, the second message authentication code based on the target algorithm and the first message authentication code, wherein the second message authentication code is for authenticating the bootstrapping server function network element.

18. The method according to any one of claims 13 to 17, wherein before the generating, by a terminal device, a first bootstrapping request message, the method further comprises:
reading, by a mobile equipment ME of the terminal device, algorithms supported by a universal integrated circuit card UICC of the terminal device, wherein
the algorithms supported by the terminal device are the algorithms supported by the universal integrated circuit card UICC.

19. The method according to any one of claims 13 to 18, wherein the terminal device receives the second message authentication code from the bootstrapping server function network element, and the method further comprises:
receiving, by the terminal device, third indication information from the bootstrapping server function network element, wherein the third indication information is for indicating the terminal device to use a mobile equipment-based generic bootstrapping architecture GBA_ME mechanism; and
verifying, by the terminal device, the second message authentication code.

20. An algorithm negotiation method in a generic bootstrapping architecture, comprising:
receiving, by a home subscriber server network element, a first request message from a bootstrapping server function network element; and
sending, by the home subscriber server network element, a first response message to the bootstrapping server function network element, wherein the first response message comprises an algorithm supported by the terminal device or second indication information, the algorithm supported by the terminal device comprises a first algorithm and/or a second algorithm, and the second indication information indicates that the algorithm supported by the terminal device comprises the second algorithm.

21. The method according to claim 20, wherein the first algorithm comprises a secure hash algorithm 1, and the second algorithm comprises a secure hash algorithm 256.

22. An algorithm negotiation apparatus in a generic bootstrapping architecture, comprising:
a processing unit, configured to obtain an algorithm supported by a terminal device, wherein the algorithm supported by the terminal device comprises a first algorithm and/or a second algorithm, wherein
the processing unit is further configured to select a target algorithm based on the algorithm supported by the terminal device, and
the processing unit is further configured to determine a first message authentication code based on the target algorithm; and
a communication unit, configured to send the first message authentication code to the terminal device.

23. The apparatus according to claim 22, wherein
the communication unit is further configured to send the target algorithm to the terminal device.

24. The apparatus according to claim 22 or 23, wherein the first algorithm comprises a secure hash algorithm 1, and the second algorithm comprises a secure hash algorithm 256.

25. The apparatus according to any one of claims 22 to 24, wherein
the communication unit is further configured to receive the algorithm supported by the terminal device, first indication information, a first identifier, or a second identifier from the terminal device; and
the processing unit is further configured to determine, based on the first indication information, that the algorithm supported by the terminal device comprises the second algorithm;
the processing unit is further configured to determine, based on the first identifier, that the algorithm supported by the terminal device comprises the second algorithm, wherein the first identifier is generated based on the second identifier; or
the processing unit is further configured to determine, based on the second identifier, that the terminal device supports the first algorithm.

26. The apparatus according to claim 25, wherein
the first identifier is generated based on the second identifier and an identity public key IPK.

27. The apparatus according to claim 25 or 26, wherein
the communication unit is further configured to receive a first bootstrapping request message from the terminal device, wherein the first bootstrapping request message comprises the algorithm supported by the terminal device, the first indication information, the first identifier, or the second identifier.

28. The apparatus according to any one of claims 25 to 27, wherein the second identifier is one of the following information of the terminal device: a subscription permanent identifier SUPI, an internet protocol multimedia private identity IMPI, an international mobile subscriber identity IMSI, or a generic public subscription identifier GPSI.

29. The apparatus according to any one of claims 22 to 25, wherein
the communication unit is further configured to receive second indication information or the second algorithm supported by the terminal device from the home subscriber server network element, wherein the second indication information indicates that the algorithm supported by the terminal device comprises the second algorithm; and
the processing unit is further configured to determine, based on the second indication information, that the algorithm supported by the terminal device comprises the second algorithm.

30. The apparatus according to claim 29, wherein
the communication unit is further configured to send a first request message to the home subscriber server network element; and
the communication unit is further configured to receive a first response message from the home subscriber server network element, wherein the first response message comprises the second indication information or the algorithm supported by the terminal device.

31. The apparatus according to any one of claims 22 to 30, wherein
the processing unit is further configured to: before selecting the target algorithm based on the algorithm supported by the terminal device, determine to use a generic bootstrapping architecture with universal integrated circuit card-based enhancements GBA_U mechanism.

32. The apparatus according to any one of claims 22 to 31, wherein
the processing unit is further configured to: when the algorithm supported by the terminal device comprises the second algorithm, select the second algorithm as the target algorithm.

33. The apparatus according to any one of claims 22 to 32, wherein
the processing unit is further configured to: after obtaining the algorithm supported by the terminal device and before selecting the target algorithm based on the algorithm supported by the terminal device, determine whether the processing unit supports the algorithm supported by the terminal device; and
if the processing unit supports the algorithm supported by the terminal device, the processing unit selects the target algorithm; or
if the processing unit does not support the algorithm supported by the terminal device, the processing unit sends third indication information to the terminal device, wherein the third indication information indicates the terminal device to use a mobile equipment-based generic bootstrapping architecture GBA_ME mechanism.

34. An algorithm negotiation apparatus in a generic bootstrapping architecture, comprising:
a processing unit, configured to generate a first bootstrapping request message; and
a communication unit, configured to send the first bootstrapping request message to a bootstrapping server function network element, wherein the first bootstrapping request message comprises an algorithm supported by the terminal device, a first identifier, a second identifier, or first indication information, the algorithm supported by the terminal device comprises a first algorithm and/or a second algorithm, the first identifier indicates that the terminal device supports the second algorithm, the second identifier indicates that the algorithm supported by the terminal device comprises the first algorithm, the first identifier is generated based on the second identifier, and the first indication information indicates that the algorithm supported by the terminal device comprises the second algorithm, wherein
the communication unit is further configured to receive a first message authentication code or a second message authentication code from the bootstrapping server function network element.

35. The apparatus according to claim 34, wherein the first algorithm comprises a secure hash algorithm 1, and the second algorithm comprises a secure hash algorithm 256.

36. The apparatus according to claim 34 or 35, wherein
the first identifier is generated based on the second identifier and an identifier protection key IPK.

37. The apparatus according to any one of claims 34 to 36, wherein the second identifier is one of the following information of the terminal device: a subscription permanent identifier SUPI, an internet protocol multimedia private identity IMPI, an international mobile subscriber identity IMSI, or a generic public subscription identifier GPSI.

38. The apparatus according to any one of claims 34 to 37, wherein
the communication unit is configured to receive a target algorithm from the bootstrapping server function network element, wherein the target algorithm is determined based on the algorithm supported by the terminal device; and
the processing unit is configured to determine the second message authentication code based on the target algorithm and the first message authentication code, wherein the second message authentication code is for authenticating the bootstrapping server function network element.

39. The apparatus according to any one of claims 34 to 38, wherein
the processing unit is further configured to: before generating the first bootstrapping request message, read an algorithm supported by a universal integrated circuit card UICC of the terminal device, wherein
the algorithm supported by the terminal device is the algorithm supported by the universal integrated circuit card UICC.

40. The apparatus according to any one of claims 34 to 39, wherein
the communication unit is further configured to receive third indication information from the bootstrapping server function network element, wherein the third indication information indicates the terminal device to use a mobile equipment-based generic bootstrapping architecture GBA_ME mechanism; and
the processing unit is further configured to verify the second message authentication code.

41. An algorithm negotiation apparatus in a generic bootstrapping architecture, comprising:
a processing unit, configured to receive a first request message from a bootstrapping server function network element by using a communication unit, wherein
the communication unit is further configured to send a first response message to the bootstrapping server function network element, wherein the first response message comprises an algorithm supported by the terminal device or second indication information, the algorithm supported by the terminal device comprises a first algorithm and/or a second algorithm, and the second indication information indicates that the algorithm supported by the terminal device comprises the second algorithm.

42. The apparatus according to claim 41, wherein the first algorithm comprises a secure hash algorithm 1, and the second algorithm comprises a secure hash algorithm 256.

43. A computer-readable storage medium, wherein the computer-readable storage medium stores program instructions, and when the program instructions are executed by a processor, the method according to any one of claims 1 to 21 is implemented.
